# EUROPEAN PATENT SPECIFICATION

(11) **EP 2 727 761 B1**
(45) Date of publication and mention of the grant of the patent: **18.01.2017**
(21) Application number: 13190688.5
(22) Date of filing: 29.10.2013
(51) Int. Cl.: B60L 15/20

(54) **Driving apparatus for use in electric vehicle and electric vehicle**
Antriebsvorrichtung zur Verwendung in Elektrofahrzeug sowie Elektrofahrzeug
Appareil d'entraînement destiné à être utilisé dans un véhicule électrique et ledit véhicule

(30) Priority: 31.10.2012 JP 2012241386; 28.05.2013 JP 2013111703
(43) Date of publication of application: 07.05.2014
(73) Proprietor: Yamaha Hatsudoki Kabushiki Kaisha, Iwata-shi, Shizuoka 438-8501 (JP)
(72) Inventor: Hino, Haruyoshi, Shizuoka, 438-8501 (JP)
(74) Representative: Zimmermann, Tankred Klaus

(56) References cited:
- EP-A1- 2 289 794
- WO-A1-2011/120124
- DE-A1-102010 026 767
- JP-A- 2002 255 081
- JP-A- 2007 161 219
- US-A- 5 489 002
- US-A1- 2011 048 831
- US-A1- 2012 109 436
- US-A1- 2012 247 853

## Description

### [TECHNICAL FIELD]

The present invention relates to a driving apparatus for use in electric vehicle, and to an electric vehicle.

### [BACKGROUND ART]

An electric vehicle includes an electric-vehicle control device that supplies a current to a rotating electric machine in accordance with a state of an accelerator operator that is operated by a rider. A driving force generated by the rotating electric machine causes the electric vehicle to travel.

The electric vehicle includes a battery as a power source. A possible travel distance obtained per charging is limited by the capacity of the battery. Thus, the electric vehicle is better suited for a short-distance travel than a long-distance travel. Moreover, unlike a bicycle, the electric vehicle can be caused to travel by the rider operating the accelerator operator, without pedaling. Therefore, the electric vehicle, which is considered as a vehicle more convenient than a bicycle, tends to be used for purposes (such as commuting and shopping) intimately involved in daily lives. Accordingly, in general, a high demand for ease of use and good riding comfort is put on the electric vehicle.

Patent Document 1 discloses an electric vehicle that controls the torque of a rotating electric machine appropriately for the state of traveling of an electric vehicle such that smooth acceleration performance and adequate climbing ability can be exerted.

### [PRIOR ART DOCUMENTS]

### [PATENT DOCUMENTS]

[Patent Document 1] Japanese Patent Application Laid-Open No. 2001-197614

WO 2011/120124 A1 discloses a system of operating an electric bicycle wirelessly, the system comprising an electric powered driving wheel, a wireless throttle subsystem, a wireless brake subsystem, a wireless power control subsystem and a wireless pedal assist subsystem. The system further comprises a throttle lever with slow speed, medium speed and high speed switches. A signal transmitter is inside the throttle lever and a throttle signal receiver is connected and attached to a motor controller. Turning of the throttle lever leads to the activation of different speed switches, said activations lead to the change of transmitted signal from the throttle transmitter.

US 2012/247853 A1 discloses an assistive power control apparatus for a motor-assisted bicycle, which controls a motor to generate an assistive torque depending on the pedaling force of a rider. The assistive power control apparatus detects a rotating torque value of a crankshaft rotated when a rider steps on pedals by a torque sensor, controls a motor to generate an assistive power determined using the rotating torque value, calculates a rotation angle of the crankshaft when a present rotating torque value is detected from a time period from a timing of detection of a peak position of the rotating torque value to a timing of detection of the rotating torque value, calculates a pedaling force applied when the rider steps on the pedals from the calculated rotation angle of the crankshaft and the detected present rotating torque value, and determines the assistive power of the motor according to the calculated pedaling force.

US 2012/109436 A1 discloses a bicycle motor control system configured to control a drive assistance motor that can be installed on a bicycle having a drive force transmitting body. The bicycle motor control system comprises a memory device, a pedaling force detecting device, a propulsion force calculating section and a motor control section. The memory device stores a tooth count of a plurality of transmitting teeth of the drive force transmitting body. The pedaling force detecting device detects a pedaling force. The propulsion force calculating section calculates a propulsion force based on a pedaling force detected by the pedaling force detecting device and the tooth count of the transmitting teeth stored in the memory device. The motor control section controls the motor based on the propulsion force.

### [SUMMARY OF THE INVENTION]

### [PROBLEMS TO BE SOLVED BY THE INVENTION]

In a case of generating a high torque under a low speed to thereby increase the climbing ability of the electric vehicle as shown in Patent Document 1, the amount of change in the torque relative to the amount of operation the rider performs on the accelerator operator increases, which may impair riding comfort. On the other hand, performing a limiter control such that the torque of the rotating electric machine in a low-speed range is suppressed to a certain value or less improves riding comfort, but fails to make full use of the performance of the rotating electric machine, resulting in an insufficient torque under a low speed and a high load. In applications that are intimately involved in daily lives, too, climbing a hill or passing over a step occurs. Traveling with a heavy load may also occur. An insufficient torque under such a state where the speed is low and the load is high results in a great inconvenience in use. Thus, ease of use and riding comfort of the electric vehicle have a trade-off relation. Therefore, there is a problem that it is difficult to satisfy good riding comfort and at the same time satisfy ease of use by ensuring a sufficient output torque under a low speed. Against this problem, Patent Document 1 discloses performing a torque control in consideration of the state of traveling (for example, a change in the speed) of the electric vehicle, to thereby increase the climbing ability and at the same time suppress a fluctuation in the acceleration, which is otherwise caused by a fluctuation in the torque, thus achieving a smooth behavior of the vehicle.

However, in order to generate a high torque under a low speed, it is usually necessary to adopt a rotating electric machine provided with a permanent magnet having a strong magnetic force, or to adopt a rotating electric machine that allows a high current to flow therethrough. Adoption of such rotating electric machines increases power consumption of the battery. As a result, in the electric vehicle that uses a battery with a limited capacity, another problem arises that a possible travel distance is shortened.

An object of the present invention is to provide a driving apparatus for use in electric vehicle and an electric vehicle that are able to suppress uncomfortableness felt by a rider because of a fluctuation in the acceleration, and at the same time able to output an adequate torque under a low speed and a high load, and additionally able to prolong a possible travel distance of the electric vehicle obtainable per charging.

### [MEANS FOR SOLVING THE PROBLEMS]

The present invention is an invention accomplished in view of the problems described above, and adopts the following configurations.
(1) A driving apparatus for use in electric vehicle,
   the driving apparatus including:
   a rotating electric machine including a permanent magnet, the rotating electric machine driving a wheel that is rotatably mounted to a vehicle body;
   an accelerator operator configured to be operated by a rider;
   an accelerator operation detection part that detects a state of the accelerator operator;
   a current control input member configured to be operated by the rider;
   a current control input detection part that detects a state of the current control input member; and
   a control device that supplies a current from a battery to the rotating electric machine in accordance with an output of the accelerator operation detection part, the control device being configured to, at least under a low speed and a high load, supply a current from the battery to the rotating electric machine in such a manner that, when an operation the rider performs on the current control input member is detected by the current control input detection part, a high current value and a low current value are alternately repeated in the rotating electric machine in accordance with an output of the current control input detection part and additionally in such a manner that the high current value exceeds a current value that has been supplied to the rotating electric machine in accordance with the output of the accelerator operation detection part at a time point of state shifting from a state where a current is supplied from the battery to the rotating electric machine in accordance with the output of the accelerator operation detection part to a state where the high current value and the low current value are alternately repeated in the rotating electric machine in accordance with the output of the current control input detection part.

In the driving apparatus for use in electric vehicle of (1), when, at least under a low speed and a high load, the operation the rider performs on the current control input member is detected by the current control input detection part under the condition that a current is supplied from the battery to the rotating electric machine in accordance with the output of the accelerator operation detection part; the intention of the rider who has operated the current control input member is detected, and a current value is supplied. This current value is higher than the current value that has been supplied to the rotating electric machine in accordance with the output of the accelerator operation detection part at the time point of state shifting from the state where a current is supplied from the battery to the rotating electric machine in accordance with the output of the accelerator operation detection part to the state where the high current value and the low current value are alternately repeated in the rotating electric machine in accordance with the output of the current control input detection part. Accordingly, a current higher than a current that is normally supplied in the operation of the accelerator operator is supplied to the rotating electric machine. This can provide a torque higher than a torque obtained by a normal accelerator operator.

Moreover, the current supplied to the rotating electric machine alternately and repeatedly takes the high current value and the low current value. Therefore, occurrence of a situation where a current higher than the current normally supplied in the operation of the accelerator operator is continuously supplied to the rotating electric machine is prevented. This can sufficiently ensure the durability of the rotating electric machine. Besides, traveling under a low speed and a high load, such as climbing a hill, occurs at a limited frequency as compared with normal traveling. In this point as well, the durability of the rotating electric machine is sufficiently ensured.

In a case where this control is performed, the high current value and the low current value are alternately repeated, so that the torque fluctuates and thus the acceleration fluctuates, too. In this control, however, the high current value and the low current value are alternately and repeatedly supplied to the rotating electric machine in accordance with the operation of the current control input member (that is, the rider's intention). Accordingly, the rider recognizes in advance, at a time point when the rider operates the current control input member, that a fluctuation in the acceleration will occur. Therefore, the fluctuation in the acceleration is less likely to be recognized as uncomfortableness.

Furthermore, a torque higher than the torque obtained by the normal accelerator operator can be obtained. This allows adoption of a permanent magnet having a weak magnetic force. As a result, the torque under a low speed and a high load is suppressed, and the amount of change in the torque relative to the amount of operation the rider performs on the accelerator operator can be reduced. Thus, uncomfortableness felt by the rider under a low speed and a low load can also be suppressed. Additionally, weakening the magnetic force of the permanent magnet can reduce an iron loss of the rotating electric machine under a high speed. Consequently, an increase in the power consumption of the battery under a high speed can be suppressed.

Accordingly, in the self-traveling type driving apparatus for use in electric vehicle of (1), uncomfortableness felt by the rider because of a fluctuation in the acceleration can be suppressed, and at the same time an adequate torque can be outputted under a low speed and a high load, and additionally a possible travel distance of the self-traveling type electric vehicle obtained per charging can be prolonged.

In the description herein, "a current value that has been supplied to the rotating electric machine in accordance with the output of the accelerator operation detection part at a time point of state shifting from a state where a current is supplied from the battery to the rotating electric machine in accordance with the output of the accelerator operation detection part to a state where the high current value and the low current value are alternately repeated in the rotating electric machine in accordance with the output of the current control input detection part" is also referred to as a current value that has been supplied to the rotating electric machine in accordance with the output of the accelerator operation detection part immediately before the operation of the current control input member.

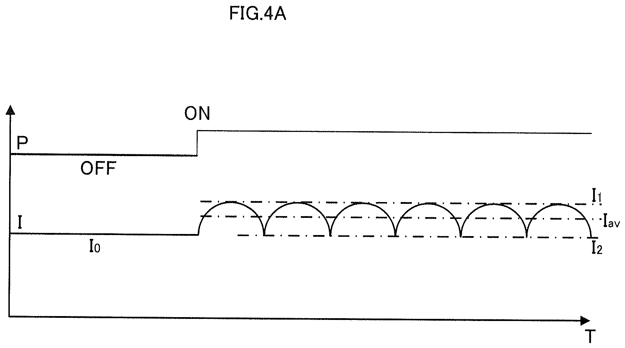

In a case where the high current value and the low current value are alternately repeated, increase and decrease in the current value are alternately repeated. A current value at a time when the current value turns from increase to decrease corresponds to "high current value". A current value at a time when the current value turns from decrease to increase corresponds to "low current value". As shown in FIGS. 4A to 4D, when the waveform of the current value is expressed by a graph whose horizontal axis represents time and vertical axis represents the current value, the high current value corresponds to the peak of the waveform, and the low current value corresponds to the trough of the waveform. When the current value turns from increase to decrease or when the current value turns from decrease to increase, the current value may be kept constant for a certain time period. In the course of alternately repeating the high current value and the low current value, a plurality of "high current values" and a plurality of "low current values" occur. The "high current values" may be either equal to or different from one another. The "low current values" may be either equal to or different from one another. Any of the "low current values" may be greater than any of the "high current values". It is not always necessary that all of the plurality of "high current values" are greater than the current value that has been supplied to the rotating electric machine in accordance with the output of the accelerator operation detection part immediately before the operation of the current control input member. It suffices that at least part of the plurality of "high current values" is greater than the current value that has been supplied to the rotating electric machine in accordance with the output of the accelerator operation detection part immediately before the operation of the current control input member.
(2) The driving apparatus for use in electric vehicle according to (1), wherein
   when an operation the rider performs on the current control input member is detected by the current control input detection part under a state where at least an operation the rider performs on the current control input member is not detected by the current control input detection part and at the same time a current having a maximum value suppliable in accordance with the output of the accelerator operation detection part is supplied to the rotating electric machine, the control device supplies a current from the battery to the rotating electric machine in such a manner that the high current value exceeds the maximum value.
   In a configuration of (2), a higher torque can be outputted under a low speed and a high load. Alternately repeating the high current value and the low current value prevents a situation where a high current is continuously supplied. Therefore, the durability of the rotating electric machine is sufficiently ensured. Additionally, traveling under a low speed and a high load occurs at a limited frequency as compared with normal traveling. In this point as well, the durability of the rotating electric machine is sufficiently ensured.
(3) The driving apparatus for use in electric vehicle according to (2), wherein when an operation the rider performs on the current control input member is detected by the current control input detection part under a state where at least an operation the rider performs on the current control input member is not detected by the current control input detection part and at the same time a current having a maximum value suppliable in accordance with the output of the accelerator operation detection part is supplied to the rotating electric machine, the control device supplies a current from the battery to the rotating electric machine in such a manner that the average of the alternately repeated high and low current values exceeds the maximum value.
   In a configuration of (3), a further higher torque can be outputted under a low speed and a high load. Alternately repeating the high current value and the low current value prevents a situation where a high current is continuously supplied. Therefore, the durability of the rotating electric machine is sufficiently ensured. Additionally, traveling under a low speed and a high load occurs at a limited frequency as compared with normal traveling. In this point as well, the durability of the rotating electric machine is sufficiently ensured.
(4) The driving apparatus for use in electric vehicle according to any one of (1) to (3), wherein
   the current control input detection part is configured such that the magnitude of an output value of the current control input detection part changes in accordance with a change in the amount of operation the rider performs on the current control input member,
   when the amount of operation the rider performs on the current control input member is repeatedly increased and decreased under a condition that, at least under a low speed and a high load, a current is supplied from the battery to the rotating electric machine in accordance with the output of the accelerator operation detection part and at the same time the current control input member is operated by the rider so that a current is supplied to the rotating electric machine in accordance with the output of the current control input detection part; the control device performs a control such that a timing when the rotating electric machine has supplied thereto a current having a higher current value than a current value that has been supplied to the rotating electric machine in accordance with the output of the accelerator operation detection part at a time point of state shifting from a state where a current is supplied from the battery to the rotating electric machine in accordance with the output of the accelerator operation detection part to a state where the high current value and the low current value are alternately repeated in the rotating electric machine in accordance with the output of the current control input detection part, is coincident with a timing when the output value of the current control input detection part fluctuates.
   In the driving apparatus for use in electric vehicle of (4), when the rider desiring a higher torque operates the current control input member so as to repeatedly increase and decrease the amount of operation thereof, the output value of the current control input detection part fluctuates in accordance with a change in the amount of operation of the current control input member. A control is performed such that a timing when the rotating electric machine has supplied thereto a current having a higher current value than a current value that has been supplied to the rotating electric machine in accordance with the output of the accelerator operation detection part at a time point of state shifting from a state where a current is supplied from the battery to the rotating electric machine in accordance with the output of the accelerator operation detection part to a state where the high current value and the low current value are alternately repeated in the rotating electric machine in accordance with the output of the current control input detection part, is coincident with a timing when the output value of the current control input detection part fluctuates. Accordingly, a timing when the torque increases so that the acceleration increases is coincident with a timing when the rider increases and decreases the amount of operation. The increasing and decreasing of the amount of operation performed by the rider is based on the rider's intention. Since the rider can determine a timing when the acceleration increases with his/her own intention, a fluctuation in the acceleration is less likely to be recognized as uncomfortableness.
   The amount of operation of the current control input member is not particularly limited. Examples thereof include the amount of displacement (the amount of stroke) of the current control input member caused as a result of the operation the rider performs on the current control input member, a force given to the current control input member by the operation the rider performs, and the number of operations the rider performs on the current control input member. The amount of displacement of the current control input member is not limited to the amount of displacement in a linear reciprocating movement, but may be the amount of displacement in a rotational reciprocating movement. As the force given to the current control input member by the operation the rider performs, for example, a torque caused by an operation performed on the current control input member may be mentioned.
   For performing a control such that a timing when the rotating electric machine has supplied thereto a current having a higher current value than a current value that has been supplied to the rotating electric machine in accordance with the output of the accelerator operation detection part immediately before the operation of the current control input member is coincident with a timing when the output value of the current control input detection part fluctuates, an exemplary aspect is as follows: a time interval between time points at which the rotating electric machine has supplied thereto a current having a higher current value than a current value that has been supplied to the rotating electric machine in accordance with the output of the accelerator operation detection part immediately before the operation of the current control operator is made substantially coincident with a time interval between time points at which the output value of the current control input detection part becomes the high output value in the course of a high output value and a low output value of the current control input detection part being repeated. Here, the time intervals need not always be constant. In the present invention, it suffices that a time interval between time points at which the current having the high current value is supplied is substantially coincident with a time interval between time points at which the output value of the current control input detection part becomes the high output value. A timing when the current having the high current value is supplied need not always be coincident with a timing when the output value of the current control input member becomes the high output value.
   It is not necessary that a timing when the current having the high current value is supplied is coincident with a timing when the output value of the current control input detection part fluctuates throughout a period in which the high current value and the low current value are alternately repeated. It suffices that a timing when the current having the high current value is supplied is coincident with a timing when the output value of the current control input detection part fluctuates in at least part of a period in which the high current value and the low current value are alternately repeated.
(5) The driving apparatus for use in electric vehicle according to (4), wherein
   the current control input detection part is configured to detect a force the rider gives to the current control input member, and configured such that the magnitude of an output value of the current control input detection part changes in accordance with a change in the force given to the current control input member,
   when the force the rider gives to the current control input member is repeatedly increased and decreased under a condition that, at least under a low speed and a high load, a current is supplied from the battery to the rotating electric machine in accordance with the output of the accelerator operation detection part and at the same time the current control input member is operated by the rider so that a current is supplied to the rotating electric machine in accordance with the output of the current control input detection part; the control device performs a control such that a timing when the rotating electric machine has supplied thereto a current having a higher current value than a current value that has been supplied to the rotating electric machine in accordance with the output of the accelerator operation detection part at a time point of state shifting from a state where a current is supplied from the battery to the rotating electric machine in accordance with the output of the accelerator operation detection part to a state where the high current value and the low current value are alternately repeated in the rotating electric machine in accordance with the output of the current control input detection part, is coincident with a timing when the output value of the current control input detection part fluctuates.
   In the driving apparatus for use in electric vehicle of (5), the magnitude of the force detected by the current control input detection part is changed in accordance with a force given to the current control input member by the operation the rider performs. A control is performed such that a timing when the rotating electric machine has supplied thereto a current having a higher current value than a current value that has been supplied to the rotating electric machine in accordance with the output of the accelerator operation detection part at a time point of state shifting from a state where a current is supplied from the battery to the rotating electric machine in accordance with the output of the accelerator operation detection part to a state where the high current value and the low current value are alternately repeated in the rotating electric machine in accordance with the output of the current control input detection part, is coincident with a fluctuation in the force indicated by the output of the current control input detection part. Accordingly, a timing when the torque increases so that the acceleration increases is coincident with a timing when the force the rider gives to the current control input member fluctuates. The increasing and decreasing of the force given by the rider is based on the rider's intention. Since the rider is able to cause a timing when the acceleration increases coincidentally with a timing when the force generated with his/her own intention fluctuates, a fluctuation in the acceleration is further less likely to be recognized as uncomfortableness.
(6) The driving apparatus for use in electric vehicle according to any one of (1) to (5), wherein
   the permanent magnet is a ferrite magnet or a neodymium bonded magnet.
   In the driving apparatus for use in electric vehicle according to any one of (1) to (5), as described above, an adequate torque can be outputted under a low speed and a high load. Accordingly, even when a magnet with a weak magnetic force is used, occurrence of a situation where only an insufficient torque output is obtained under a low speed and a high load can be suppressed. As a result, a torque can be more sufficiently outputted under a low speed and a high load, and additionally a torque under a high speed can be ensured.
   Under a high speed, the frequency of switching of the poles (N and S poles of the magnet) in the rotating electric machine is high. When the frequency of switching the poles in the rotating electric machine is high, a change in the magnetic force occurs frequently. Thus, each time the magnetic force changes, a current occurs in the magnet so as to cancel the change. This current generates Joule heat in the magnet, and heat generation due to the Joule heat causes an energy loss. The energy loss decreases as the magnetic force of the magnet is weaker. Therefore, using a magnet with a weak magnetic force can ensure a long possible travel distance of the electric vehicle obtainable per charging.
   Accordingly, in the driving apparatus for use in electric vehicle of (6), by using a magnet with a relatively weak magnetic force, the following effects can be achieved at a higher level: uncomfortableness felt by the rider because of a fluctuation in the acceleration can be suppressed, and at the same time an adequate torque can be outputted under a low speed and a high load, and additionally the possible travel distance of the electric vehicle obtained per charging can be prolonged.
(7) The driving apparatus for use in electric vehicle according to any one of (1) to (5), wherein
   the rotating electric machine is configured to transmit power directly to a wheel without interposition of a power transmission mechanism.
   In the driving apparatus for use in electric vehicle of (7), a space for installation of the power transmission mechanism can be omitted, and therefore the number of magnets (the number of poles) included in the rotating electric machine can be increased. Increasing the number of magnets included in the rotating electric machine provides a high torque, but increases the frequency of switching the poles (N and S poles of the magnet) in the rotating electric machine. When the frequency increases so that a magnetic field frequently changes, a large energy loss occurs. However, in the driving apparatus for use in electric vehicle of (7), as described above, a torque higher than the torque obtained by the normal accelerator operator can be obtained. Therefore, a permanent magnet with a weak magnetic force can be used. In a case where a permanent magnet with a weak magnetic force is used, a current occurring in a stator does not easily increase even though a magnetic field changes. This suppresses an increase in the energy loss. Accordingly, the output torque of the rotating electric machine can be increased with suppression of an increase in the power consumption of the battery.
(8) The driving apparatus for use in electric vehicle according to any one of (1) to (7), wherein
   the driving apparatus includes a power transmission mechanism for transmitting, to a wheel, a force the rider gives to the current control input member,
   when, at least under a low speed and a high load, a current is supplied from the battery to the rotating electric machine in accordance with the output of the accelerator operation detection part and at the same time the current control input member is operated by the rider so that a current is supplied to the rotating electric machine in accordance with the output of the current control input detection part, and at the same time the force given to the current control input member is transmitted to the wheel; the control device supplies, to the rotating electric machine, a current having a higher current value than a current value that has been supplied to the rotating electric machine in accordance with the output of the accelerator operation detection part at a time point of state shifting from a state where a current is supplied from the battery to the rotating electric machine in accordance with the output of the accelerator operation detection part to a state where the high current value and the low current value are alternately repeated in the rotating electric machine in accordance with the output of the current control input detection part.
   In the driving apparatus for use in electric vehicle of (8), a high current is supplied to the rotating electric machine when, at least under a low speed and a high load, a current is supplied from the battery to the rotating electric machine in accordance with the output of the accelerator operation detection part and at the same time the current control input member is operated by the rider so that a current is supplied to the rotating electric machine in accordance with the output of the current control input detection part, and at the same time the force given to the current control input member is transmitted to the wheel. Thereby, a relatively high torque is outputted from the rotating electric machine to the wheel, and additionally the force the rider has given to the current control input member is transmitted to the wheel. This can generate a larger driving force. Accordingly, a highest torque outputtable at least under a low speed and a high load can be further increased. Since the operation the rider performs on the current control input member is based on the rider's intention, an increase in the acceleration due to an increase in the torque is particularly less likely to be recognized as uncomfortableness.
(9) The driving apparatus for use in electric vehicle according to any one of (1) to (7), wherein
   the driving apparatus includes a power transmission mechanism for transmitting, to a wheel, a force the rider gives to the current control input member,
   when, at least under a low speed and a high load, a current is supplied from the battery to the rotating electric machine in accordance with the output of the accelerator operation detection part and at the same time the current control input member is operated by the rider so that a current is supplied to the rotating electric machine in accordance with the output of the current control input detection part, and at the same time the force given to the current control input member is not transmitted to the wheel; the control device supplies, to the rotating electric machine, a current having a higher current value than a current value that has been supplied to the rotating electric machine in accordance with the output of the accelerator operation detection part at a time point of state shifting from a state where a current is supplied from the battery to the rotating electric machine in accordance with the output of the accelerator operation detection part to a state where the high current value and the low current value are alternately repeated in the rotating electric machine in accordance with the output of the current control input detection part.
   In the driving apparatus for use in electric vehicle of (9), a high current is supplied to the rotating electric machine when, at least under a low speed and a high load, a current is supplied from the battery to the rotating electric machine in accordance with the output of the accelerator operation detection part and at the same time the current control input member is operated by the rider so that a current is supplied to the rotating electric machine in accordance with the output of the current control input detection part, and at the same time the force given to the current control input member is not transmitted to the wheel. This reduces a difference between a force applied to the wheel under the condition that the force given to the current control input member is transmitted to the wheel and a force applied to the wheel under the condition that the force given to the current control input member is not transmitted to the wheel. Accordingly, the fluctuation in the acceleration caused by a fluctuation in the magnitude of the force applied to the wheel is reduced. As a result, smooth traveling under a low speed and a high load is achieved. Since the operation the rider performs on the current control input member is based on the rider's intention, increase and decrease in the acceleration caused by increase and decrease in the torque is particularly less likely to be recognized as uncomfortableness.
(10) An electric vehicle,
   the electric vehicle comprising:
   a vehicle body;
   a wheel that is rotatably mounted to the vehicle body; and
   the driving apparatus for use in electric vehicle according to any one of (1) to (9).

In a configuration of (10), uncomfortableness felt by the rider because of a fluctuation in the acceleration can be suppressed, and at the same time an adequate torque can be outputted under a low speed and a high load, and additionally the possible travel distance of the electric vehicle obtained per charging can be prolonged.

### [EFFECTS OF THE INVENTION]

In the present invention, uncomfortableness felt by the rider because of a fluctuation in the acceleration can be suppressed, and at the same time an adequate torque can be outputted under a low speed and a high load, and additionally the possible travel distance of the electric vehicle obtained per charging can be prolonged.

### [BRIEF DESCRIPTION OF THE DRAWINGS]

[FIG. 1] A side view schematically showing an electric motorcycle according to an embodiment of the present invention.
[FIG. 2] A block diagram showing a main configuration concerning a drive system of the electric motorcycle shown in FIG. 1.
[FIG. 3] A diagram schematically showing the relationship between an output torque of a rotating electric machine and the number of rotations of the rotating electric machine.
[FIG. 4A] A diagram schematically showing an example of the relationship between time and power supplied to the rotating electric machine.
[FIG. 4B] A diagram schematically showing an example of the relationship between time and power supplied to the rotating electric machine.
[FIG. 4C] A diagram schematically showing an example of the relationship between time and power supplied to the rotating electric machine.
[FIG. 4D] A diagram schematically showing an example of the relationship between time and power supplied to the rotating electric machine.
[FIG. 5] A diagram schematically showing a travel performance curve of the electric motorcycle.

### [EMBODIMENTS FOR CARRYING OUT THE INVENTION]

The present inventor has conducted studies particularly on a state of traveling of an electric vehicle in view of the problems described above.

In general, an electric vehicle tends to be used for purposes intimately involved in daily lives, and the electric vehicle has a relatively low maximum speed (for example, about 20 to 30 km/h). Therefore, the electric vehicle often travels with an accelerator operator being operated to the maximum amount by a rider.

Thus, in order to improve the efficiency of traveling, it is preferable to increase the efficiency of traveling obtained under the condition that the accelerator operator is operated to the maximum amount. To achieve this, it is conceivable to suppress an energy loss of a rotating electric machine under a high speed. Accordingly, the present inventor has changed the way of thinking and deviated from the conventional concept of designing the electric vehicle, and has reached an idea of providing a magnet with a weak magnetic force to the rotating electric machine.

In the field of electric vehicles, conventionally, technology developments for a wheel-driving rotating electric machine have been made with priority to achievement of travel performance (including high-speed travel performance, acceleration performance, and the like) that is comparable to the travel performance of an internal combustion (engine). Therefore, in the course of the technology developments for the electric vehicle, there has conventionally been a preconceived notion (technical prejudice) that improvement in the travel performance should be considered preferentially. Accordingly, a rare-earth magnet with a strong magnetic force has been adopted as a permanent magnet of the rotating electric machine included in the electric vehicle. Among rare-earth magnets, particularly, a neodymium magnet, which has a significantly strong magnetic force, has been widely adopted in electric vehicles.

Under such circumstances, the present inventor has changed the way of thinking and deviated from the conventional preconceived notion, to reach an idea of daringly providing a magnet with a weak magnetic force to the rotating electric machine of the electric vehicle.

This can suppress an energy loss of the rotating electric machine under a high speed, which can prolong a possible travel distance of the electric vehicle obtained per charging. Additionally, since a torque during a high speed is ensured, smooth riding comfort can be achieved at a time when the speed is high.

However, this causes a new problem that the highest torque under a low speed is reduced.

Hence, the present inventor has studied a state of traveling of the electric vehicle under the condition that the highest torque under a low speed is reduced, and have found out the following.

The reduction in the highest torque under a low speed has a large influence on the travel performance at a time when the speed is low and the load is high, for example, at a time of climbing a hill and traveling with a heavy load, but has a small influence on the travel performance at a time of normal traveling.

The electric vehicle, in general, has a low frequency of traveling under such a condition that the speed is low and the load is high.

In a case where the vehicle has to travel under a low speed and a high load, a rider recognizes that traveling under a low speed and a high load will start before the traveling under a low speed and a high load actually starts. For example, before starting to climb a hill, the rider recognizes that there is an uphill ahead in the traveling path. Likewise, before starting to travel with a heavy load, the rider recognizes that the load on the electric vehicle is heavy.

The present inventor has further conducted intensive studies based on the above-described findings, and reached the following idea.

Before staring to travel under a low speed and a high load, the rider recognizes that the traveling under a low speed and a high load will start. Accordingly, it is better to supply a current to the rotating electric machine in such a manner that a high current value and a low current value are alternately repeated at least in accordance with the rider's input (that is, the rider's intention) and additionally in such a manner that the high current value exceeds a current value that has been supplied to the rotating electric machine immediately before the high current value and the low current value are repeated in accordance with the rider's input. As a result, a torque higher than the torque that is outputted in accordance with a normal operation of the accelerator operator is obtained. Moreover, occurrence of a situation where a current higher than the current normally supplied in the operation of the accelerator operator is continuously supplied to the rotating electric machine is prevented. This can ensure the durability of the rotating electric machine.

Repeatedly providing the high current value and the low current value to the rotating electric machine causes a fluctuation in the acceleration, and thus the riding comfort changes. In the conventional concept of designing the electric vehicle, such a change in the riding comfort is considered to be undesirable. However, as described above, traveling under a low speed and a high load does not frequently occur. Additionally, before starting to travel under a low speed and a high load, the rider recognizes that the traveling under a low speed and a high load will start. Therefore, increasing and decreasing the intensity of the current supplied to the rotating electric machine based on the rider's intention makes the rider less likely to recognize the fluctuation in the acceleration as uncomfortableness. Thus, the change in the riding comfort recognized by the rider is suppressed.

Furthermore, traveling under a low speed and a high load occurs at a low frequency. Therefore, increasing and decreasing the intensity of the current supplied to the rotating electric machine in accordance with the rider's input at least under a low speed and a high load can suppress an increase in the power consumption.

The present invention is an invention accomplished through the above-mentioned intensive studies. In the course of the studies, the present inventor has found out that, even though a fluctuation in the acceleration occurs under a situation where the rider recognizes in advance that a fluctuation in the acceleration will occur, the rider is less likely to recognize the fluctuation in the acceleration as uncomfortableness. Based on the findings, the present inventor has reached an idea of daringly increasing and decreasing the intensity of the current that is supplied to the rotating electric machine under a situation where the rider's intention has been confirmed.

Such findings are contradictory to the conventional design concept that aims to suppress a fluctuation in the acceleration for the achievement of smooth traveling. Additionally, a configuration of intentionally increasing and decreasing the intensity of the current that is supplied to the rotating electric machine during traveling has conventionally not been adopted in the field of electric vehicles. That is, the present invention is an invention accomplished by, based on the findings contradictory to the conventional design concept, adopting the configuration that has conventionally not been adopted in the field of electric vehicles.

The present invention is able to suppress uncomfortableness felt by the rider because of a fluctuation in the acceleration, and at the same time able to output an adequate torque under a low speed and a high load, and additionally able to prolong the possible travel distance of the electric vehicle obtained per charging.

In the following, the present invention will be described with reference to an embodiment illustrated in the drawings.

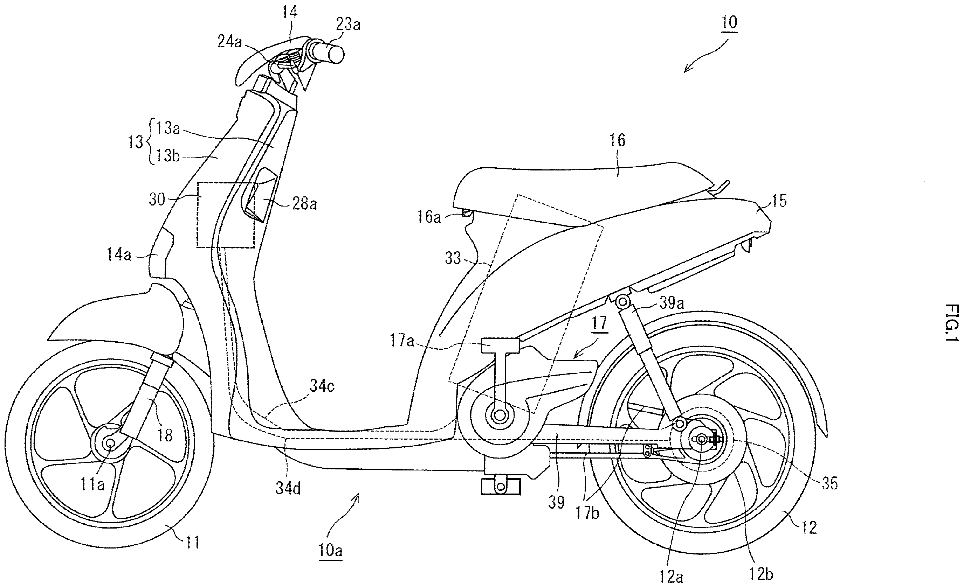

FIG. 1 is a side view schematically showing an electric motorcycle 10 according to an embodiment of the present invention. An electric motorcycle is an example of an electric vehicle. The electric vehicle includes an electric-vehicle control device that supplies a current to a rotating electric machine in accordance with a state of an accelerator operator that is operated by a rider. A driving force generated by the rotating electric machine causes the electric vehicle to travel. The electric vehicle can be caused to travel not by using a force (such as a pedaling force) given by the rider as a driving force but by the driving force generated by the rotating electric machine. The electric vehicle has a battery as a power source, and does not receive a power supply from the outside during traveling. Preferably, the electric vehicle is, though not particularly limited, a small-size electric vehicle such as an electric two-wheeled vehicle, an electric three-wheeled vehicle, an electric vehicle for off-road use (all-terrain electric vehicle), and an electric wheelchair. Examples of the two-wheeled vehicle include a scooter, a moped, and a sport type two-wheeled vehicle. Preferably, the electric vehicle is a saddle-ride type electric vehicle. Examples of the saddle-ride type electric vehicle include an electric motorcycle, an electric three-wheeled vehicle, and a vehicle for off-road use.

The electric motorcycle 10 includes a pair of wheels composed of a front wheel 11 and a rear wheel 12, and a vehicle body 10a having the pair of wheels attached thereto. The electric motorcycle 10 is configured to travel at a relatively low speed (for example, 20 to 30 km/h or less). A handlebar 14 is attached above a front cover unit 13 that constitutes a front part of the vehicle body 10a. A light 14a is provided at the center of an upper area of a front surface of the front cover unit 13. A seat 16 is provided on an upper surface of a rear cover unit 15 that constitutes a rear part of the vehicle body 10a. A pedal unit 17 by which a rider inputs a pedaling force with his/her feet is provided in the vehicle body 10a at a location below the front side of the rear cover unit 15. The diameter of the wheel is, though not particularly limited, 10 to 16 inches, for example.

The front wheel 11 is rotatably supported on a lower end portion of a front fork 18 whose lower part is bifurcated. More specifically, two lower end portions of the front fork 18 rotatably support both side portions of a center shaft 11a of the front wheel 11, thereby allowing the front wheel 11 to rotate on the center shaft 11a. Furthermore, a head pipe (not shown) is provided at a top end portion of the front fork 18. The head pipe is coupled to a front end portion of a down tube (not shown) that constitutes a main body part of the vehicle body 10a.

A steering shaft (not shown) is mounted inside the head pipe such that the steering shaft is axially rotatable. A lower end portion of the steering shaft is coupled to a central portion of the top end of the front fork 18. An upper portion of the steering shaft protrudes upward from a top end portion of the head pipe, and the handlebar 14 is coupled to a top end portion of the steering shaft. Grips 23a are provided at the right and left ends of the handlebar 14, respectively. Brake levers 24a serving to restrain rotation of the front wheel 11 or the rear wheel 12 are disposed near the grips 23a, respectively.

The grip 23a is an example of the accelerator operator of the present invention. Although no particular limitation is put on the accelerator operator, the accelerator operator may be in the form of a button, a switch, a lever, a pedal, and the like. A force given to the accelerator operator by the rider is not used as the driving force for the electric vehicle.

The front cover unit 13 includes a rear surface covering part 13a that defines a rear surface and a front surface covering part 13b that defines a front surface. A controller 30 is arranged in the front cover unit 13. The controller 30 is a device that electrically controls a drive system provided in the electric motorcycle 10. The controller 30 is an example of the control device of the present invention. A display unit (not shown) is provided in a recess 28a. The display unit displays a charge state of a battery 33, and the like. A power switch 45 is provided in the recess 28a, though not shown in FIG. 1. In the drawing, the reference numeral 34c denotes a lead connecting the controller 30 and the battery 33 to each other, and the reference numeral 34d denotes a lead connecting the controller 30 and an rotating electric machine 35 to each other.

A rear portion of the down tube, whose front end portion is coupled to the head pipe, extends obliquely downward from the portion coupled to the head pipe to the rear, and then curves to extend horizontally. A pair of rear frames (not shown) are coupled to a rear end portion of the down tube. The pair of rear frames extend obliquely upward to the rear within the rear cover unit 15. The pair of rear frames are arranged with a predetermined space therebetween, and their rear end portions are coupled to each other. The battery 33 is mounted between the rear frames.

Moreover, a rear arm 39 is coupled to the rear end portion of the down tube via a coupling member (not shown). The rear arm 39 has a pair of parallel arm members whose front end portions are coupled to each other. The rear arm 39 extends rearward. Rear end portions of the arm members of the rear arm 39 respectively support both side portions of a center shaft 12a of the rear wheel 12. Thus, the rear wheel 12 is rotatable on the center shaft 12a. A rear cushion 39a is arranged to bridge between an upper portion of the rear end of the rear arm 39 and a substantially central portion of the rear frame. Expansion and contraction of the rear cushion 39a allow a rear end portion of the rear arm 39 to swing.

A cover 12b is provided in a central portion of the rear wheel 12. The rotating electric machine 35 and a drum brake (not shown) are placed within the cover 12b. The rotating electric machine 35 is activated under control by the controller 30, to generate a driving force in the rear wheel 12. Upon an operation of the brake levers 24a, the activation of the rotating electric machine 35 is stopped under control by the controller 30.

The rotating electric machine 35 adopts the direct drive type. The direct drive type is a type that causes power (rotational force) of a rotating electric machine to be transmitted directly to a driving object wheel without interposition of any indirect power transmission mechanism. In this embodiment, the driving object wheel is the rear wheel 12. Here, the driving object wheel may be the front wheel 11, or may be both the front wheel 11 and the rear wheel 12. Additionally, the driving object wheel to be driven by the rotating electric machine and the wheel to which a torque inputted to pedals 17a is transmitted may be the same wheel or may be different wheels. It is not always necessary that the rotating electric machine of the present invention adopts the direct drive type. In other words, the rotating electric machine may be configured to transmit power to the wheel with interposition of an indirect power transmission mechanism.

The rotating electric machine 35 is a rotating electric machine of outer rotor type. The rotating electric machine of outer rotor type means a rotating electric machine in which a rotor (not shown) is arranged outside a stator (not shown) with respect to a radial direction of a wheel. However, the rotating electric machine of the present invention need not always be of outer rotor type, but may be of inner rotor type. Moreover, although the rotating electric machine 35 is of radial gap type, it may be of axial gap type.

The rotating electric machine 35 is an in-wheel motor. The in-wheel motor means a motor that is installed inside a hub part of a wheel. However, the rotating electric machine of the present invention need not always be the in-wheel motor.

The rotating electric machine 35 includes a permanent magnet (not shown) provided in its rotor. The permanent magnet provided in the rotor of the rotating electric machine 35 is a ferrite magnet. In the present invention, a type of the permanent magnet is not particularly limited. However, it is preferable that the permanent magnet is a magnet having a relatively weak magnetic force, and specifically is a ferrite magnet or a neodymium bonded magnet.

In this embodiment, the rotating electric machine 35 is an outer rotor in-wheel motor of direct drive type, and therefore a wide space within the wheel can be used. This allows the diameter of the rotor to be increased in order to ensure the torque. Increasing the diameter of the rotor increases the number of magnets (magnetic poles) included in the rotor. Additionally, since no speed reducer is interposed, use with a large number of rotations occurs more frequently, which results in a higher frequency of switching of the poles (N and S poles of the magnet) in the rotating electric machine. In a case where the frequency of switching of the poles in the rotating electric machine is high, a change in the magnetic force occurs frequently. Each time the magnetic force changes, a current occurs in a stator core so as to cancel the change. This current generates Joule heat in the stator core, and heat generation due to the Joule heat causes an energy loss. Accordingly, a large energy loss is likely to occur in a case where the rotating electric machine 35 is an outer rotor in-wheel motor of direct drive type.

In this respect, the electric motorcycle 10 is able to, at least under a low speed and a high load, provide a torque higher than the torque that is obtained by the operation of the grips 23a. Therefore, a permanent magnet with a weak magnetic force, such as a ferrite magnet or a neodymium bonded magnet, can be used. This can suppress an increase in the energy loss. Thus, in the electric motorcycle 10, an outer rotor in-wheel motor of direct drive type is adoptable as the rotating electric machine 35. As a result, the need for the power transmission mechanism is eliminated. This can enhance the energy efficiency, and also can reduce the number of parts. Moreover, weakening the magnetic force of the permanent magnet can reduce an iron loss of the rotating electric machine under a high speed, and additionally can suppress the torque under a low speed and a high load. Since the amount of change in the torque relative to the amount of operation the rider performs on the grips 23a is reduced, uncomfortableness felt by the rider under a low speed and a low load can be suppressed. Furthermore, due to an increase in the number of magnetic poles, an output torque of the rotating electric machine can be increased. Thus, adoption of the outer rotor in-wheel motor of direct drive type can suppress an increase in the torque under a low speed and a high load, and at the same time can improve the output torque over the entire speed range.

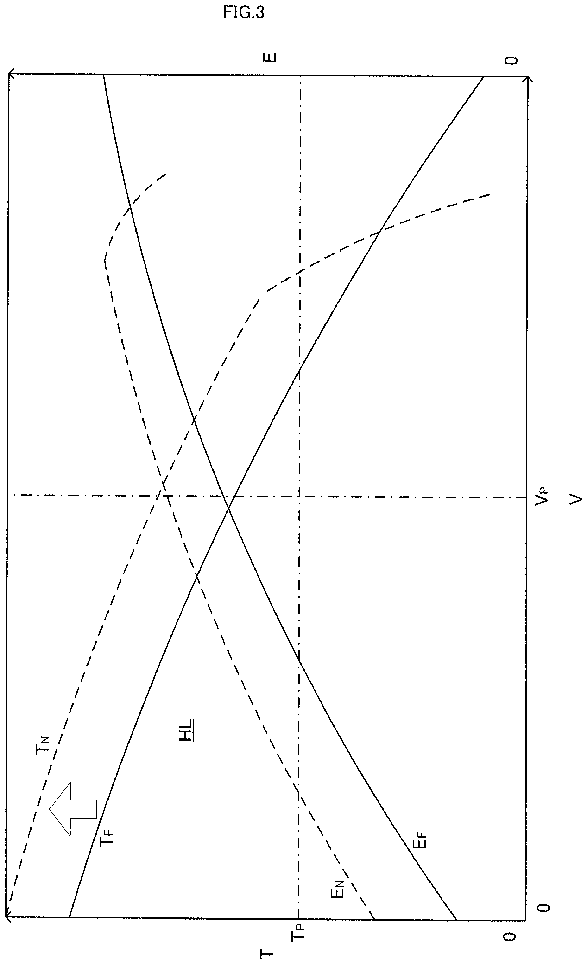

The rotating electric machine 35 is a DC motor, and more specifically is a brushless DC motor. As the amount of operation the rider performs on the grips 23a is larger, a current supplied to the rotating electric machine 35 is higher. Under a state where the current supplied to the rotating electric machine 35 is constant, an increase in the load during traveling increases the torque and also reduces the number of rotations. On the other hand, a reduction in the load during traveling reduces the torque and also increases the number of rotations (see FIG. 3).

A chain 17b runs between a gear unit (not shown) provided in the pedal unit 17 and a gear unit provided in the rear wheel 12. When the rider turns pedals 17a with his/her feet, a driving force caused by human power is transmitted from the pedal unit 17 to the rear wheel 12 through the chain 17b.

In the above-described manner, the electric motorcycle 10 is configured such that the pedals 17a can be turned with the feet to transmit the driving force to the rear wheel 12. That is, even when the electric motorcycle 10 is powered off, the electric motorcycle 10 is able to travel in the form of a bicycle. When the pedals 17a are operated under a state where the electric motorcycle 10 is powered on, the pedals 17a function as a current control input member. Details of this control will be described later.

When the rider keeps his/her feet rested on the pedals 17a without turning the pedals 17a, a one-way clutch (not shown) provided at the rear wheel 12 side is activated to prevent the rotation of the rotating electric machine 35 from being transmitted to the pedals 17a through the chain 17b. To reduce the traveling speed of the electric motorcycle 10, the controller 30 stops the activation of the rotating electric machine 35 in accordance with the operation of the brake levers 24a, and reduces the speed of the electric motorcycle 10 in accordance with the amount of operation of the brake levers 24a.

The pedal 17a is an example of the current control input member of the present invention. No particular limitation is put on the current control input member. The current control input member may be in the form of a button, a switch, a lever, a grip, or the like. The current control input member is provided separately from the accelerator operator. The current control input member and the accelerator operator are different members.

The gear units and the chain 17b correspond to the power transmission mechanism of the present invention. In the present invention, the power transmission mechanism is not limited thereto, and any conventionally known power transmission mechanism is adoptable.

Furthermore, a brake (not shown) is also provided in the front wheel 11. This brake and the drum brake of the rear wheel 12 are activated to brake the associated front wheel 11 and the rear wheel 12, respectively, in accordance with the amount of operation of the brake levers 24a.

A bottom of the front end of the seat 16, which is provided on the upper surface of the rear cover unit 15, is pivotable with a hinge coupling 16a. In the interior of the rear cover unit 15, a storage part for placing the battery 33 and a storage part for placing a helmet and the like are provided. Accordingly, when the seat 16 is pivoted about the hinge coupling 16a, the upper surface of the rear cover unit 15 can be opened. Through this opening, the battery 33, the helmet, and the like, can be taken in and out, and charging of the battery 33 can be performed. The electric motorcycle 10 also has a rotary stand (not shown) for keeping the electric motorcycle 10 upright when at rest. The rear portion of the down tube and the pedal unit 17 are covered with a covering member.

If the charge amount of the battery 33 displayed on the display unit has been reduced, a charge cord (not shown) is connected to the battery 33, thereby charging the battery 33. For this charging, the seat 16 is pivoted so that the upper surface of the rear cover unit 15 is opened, and the battery 33 is connected to a power source by using the charge cord. During the charging, the seat 16 is let down so that the upper surface of the rear cover unit 15 is closed. In this state, the charge cord extends to the outside through a gap between the rear cover unit 15 and the seat 16.

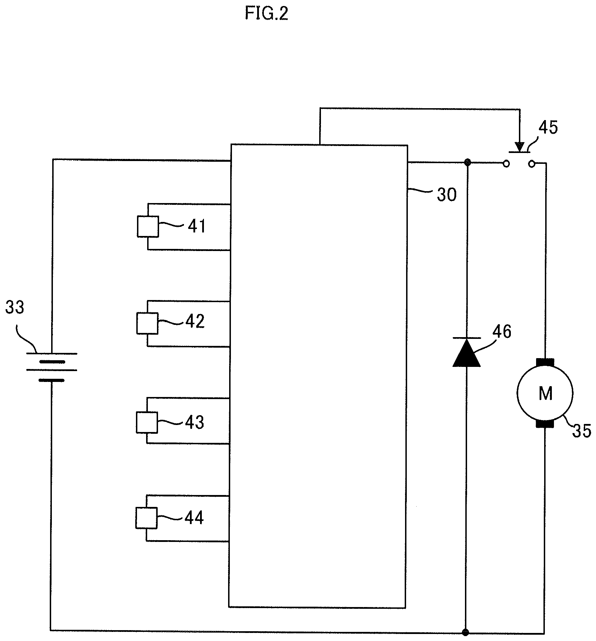

FIG. 2 is a block diagram showing a main configuration concerning the drive system of the electric motorcycle shown in FIG. 1.

The controller 30 is electrically connected to an accelerator position sensor 41, a torque sensor 42, a vehicle speed sensor 43, and a brake sensor 44. For example, conventionally known sensors are adoptable as these sensors 41 to 44.

The accelerator position sensor 41 detects the amount of operation the rider has performed on the grips 23 a with his/her hands, and transmits a signal corresponding to the amount of operation to the controller 30.

The torque sensor 42 detects a torque the rider has given to the pedals 17a with his/her feet, and transmits a signal corresponding to the torque to the controller 30. Here, the torque given to the pedals 17a means a torque inputted to a crank shaft (not shown) that couples the two right and left pedals 17a to each other.

The vehicle speed sensor 43 detects a vehicle speed. The brake sensor 44 detects the amount of operation the rider has performed on the brake levers 24a, and transmits a signal corresponding to the amount of operation. The reference numeral 45 denotes the power switch. The reference numeral 46 denotes a rectifier (diode).

The controller 30 includes, for example, a microprocessor serving as an arithmetic processing unit, a memory serving as a storage device, an interface serving as an input/output device, and the like, though not shown. The memory stores a program for controlling the electric motorcycle 10, and data used for the program. The microprocessor executes processing using the program and data stored in the memory in accordance with a signal that is inputted via the interface, and outputs a result of the processing via the interface. In this manner, the controller 30 controls the electric motorcycle 10.

Depending on how the rider operates the pedals 17a, a situation where no torque is generated may temporarily occur at the top dead center and the bottom dead center of the pedals 17a. In such a case, the rider is operating the pedals 17a, but nevertheless the torque sensor 42 detects no torque. As for this point, in this embodiment, when a state where the output of the torque sensor 42 is not inputted to the controller 30 has continued for a specified time period from a time point when the output of the torque sensor 42 became no longer inputted to the controller 30, the controller 30 determines that the operation of the pedals 17a is terminated. Thus, the controller 30 stops to increase and decrease the intensity of the current that is supplied to the rotating electric machine 35. On the other hand, when the output of the torque sensor 42 is inputted to the controller 30 within the time period, the controller 30 determines that the operation of the pedals 17a is continuing. Thus, the controller 30 continues to increase and decrease the intensity of the current that is supplied to the rotating electric machine 35. This enables the operation of the pedals 17a to be detected even when the situation where no torque is generated temporarily occurs at the top dead center and the bottom dead center of the pedals 17a. In this manner, the torque sensor 42 enables the controller 30 to detect whether or not the rider is operating the pedals 17a, and also to detect the magnitude of the torque generated as a result of the operation the rider performs on the pedals 17a. However, the present invention is not limited to this example, and it suffices that the controller is configured to detect either one of them. Additionally, a method for determining whether or not the pedals 17a are being operated is not limited to this example, and any conventionally known method is adoptable.

Under a state where the power switch 45 is powered on, the controller 30 supplies a current from the battery 33 to the rotating electric machine 35 in accordance with the output of the accelerator position sensor 41. The magnitude of an output of the accelerator position sensor 41 changes in accordance with the amount of operation the rider performs on the grips 23a. For example, the magnitude of the output of the accelerator position sensor 41 is proportional to the amount of operation the rider performs on the grips 23a. The controller 30 increases a current value of the current that is supplied from the battery 33 to the rotating electric machine 35 as the output of the accelerator position sensor 41 increases.

However, at least under a low speed and a high load, the controller 30 supplies the current from the battery 33 to the rotating electric machine 35 in such a manner that a high current value and a low current value are alternately repeated in the rotating electric machine 35 in accordance with the output of the torque sensor 42 and additionally in such a manner that the high current value exceeds a current value that has been supplied to the rotating electric machine 35 immediately before the operation of the pedals 17a in accordance with the output of the accelerator position sensor 41. Details of this processing will be described later with reference to FIGS. 4A to 4D.

The rotating electric machine 35, the grips 23a serving as an accelerator operator, the accelerator position sensor 41 serving as an accelerator operation detection part, the pedals 17a serving as a current control input member, the torque sensor 42 serving as a current control input detection part, and the controller 30 serving as a control device, constitute a driving apparatus of the electric motorcycle 10.

FIG. 3 is a diagram schematically showing the relationship between an output torque of a rotating electric machine and the number of rotations of the rotating electric machine. In FIG. 3, T represents the output torque of the rotating electric machine. V represents the number of rotations of the rotating electric machine. E represents the efficiency of the controller and the rotating electric machine. The efficiency is defined as the percentage of the ratio of an output to an input. The input means power (W) that is inputted to the rotating electric machine. The output means the product of the angular velocity (rad/sec) and the torque (Nm) of the rotating electric machine. As the number of rotations of the rotating electric machine increases, the vehicle speed of the electric motorcycle increases. Therefore, the number V of rotations in FIG. 3 may be replaced with the vehicle speed.

T_{F} and E_{F} represent the torque and the efficiency of this embodiment, respectively. T_{F} and E_{F} represent the torque and the efficiency obtained under the condition that a voltage value is constant and the output of the accelerator position sensor 41 is maximum (the amount of operation of the grips 23a is maximum). T_{F} and E_{F} are values obtained when the repeated increase and decrease in the intensity of the current in accordance with the output of the torque sensor 42 is not performed. T_{N} and E_{N} represent the torque and the efficiency obtained under the condition that a rotating electric machine including a neodymium magnet is used.

T_{P} represents a value of 1/2 of the maximum output torque of the electric motorcycle 10. Vp represents a value of 1/2 of the maximum speed of the electric motorcycle 10. T_{P} and V_{P} are values obtained when the current is supplied from the battery 33 to the rotating electric machine 35 in accordance with only the output of the accelerator position sensor 41. In other words, T_{P} and V_{P} are values obtained when the repeated increase and decrease in the intensity of the current in accordance with the output of the torque sensor 42 is not performed. In FIG. 3, a region HL represents a region in which the torque is equal to or higher than T_{P} and the speed is equal to or lower than V_{P} (when the speed is low and the load is high). When the speed is low and the load is high, the torque is located within the region HL.

The values of T_{P} and V_{P} mentioned above are merely examples of the present invention. The value of T_{P} is not particularly limited, as long as it is equal to or less than 1/2 of the maximum output torque of the electric motorcycle 10. The value of V_{P} is not particularly limited, as long as it is equal to or less than 1/2 of the maximum speed of the electric motorcycle 10.

As shown in FIG. 3, the torques T_{F} and T_{N} are high under a low speed, and low under a high speed. In comparison between the torques T_{F} and T_{N}, the torque T_{F} is lower than the torque T_{N} under a low speed. When the vehicle speed gets close to the maximum speed of the electric motorcycle 10, the torque T_{F} exceeds the torque T_{N}.

The efficiencies E_{F} and E_{N} are low under a low speed, and high under a high speed. In comparison between the efficiencies E_{F} and E_{N}, the efficiency E_{F} is lower than the efficiency E_{N} under a low speed. When the vehicle speed gets close to the maximum speed of the electric motorcycle 10, the efficiency E_{F} exceeds the efficiency E_{N}.

In the electric motorcycle 10, as described above, the rider often operates the accelerator to the maximum amount during traveling. When the vehicle speed is equal to the maximum speed of the electric motorcycle 10, the torque T_{F} is higher than the torque T_{N} while the efficiency E_{F} is higher than the efficiency E_{N}. As a result, this embodiment can achieve smoother riding comfort under a high speed. On the other hand, under a low speed and a high load, the torque T_{F} is lower than the torque T_{N} while the efficiency E_{F} is lower than the efficiency E_{N}. However, in the electric motorcycle 10, the controller 10 increases and decreases the intensity of the current that is supplied from the battery 33 to the rotating electric machine 35 in accordance with the operation the rider performs on the pedals 17a. This can increase the torque T_{F}, at least under a low speed and a high load (when the torque is located in the region HL).

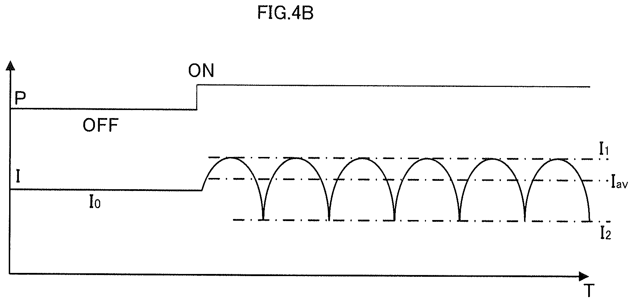

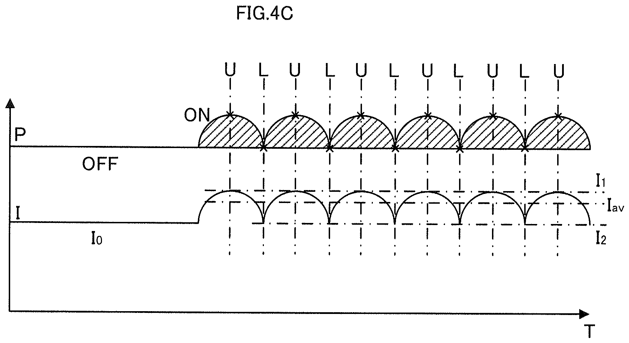

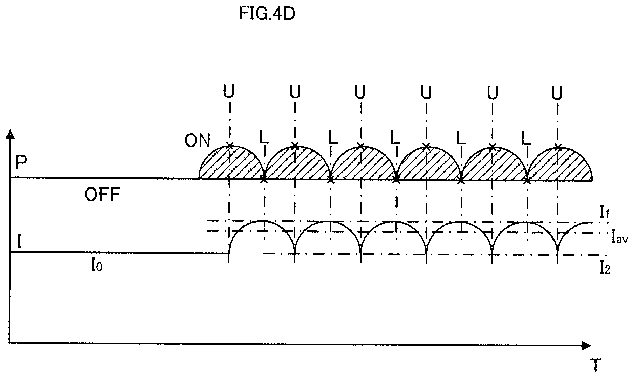

Next, the processing for increasing and decreasing the intensity of the current in accordance with the output of the torque sensor 42 will be described with reference to FIGS. 4A to 4D. FIGS. 4A to 4D illustrate a case where the rider operates the grips 23a to the maximum amount. T represents time. I represents a current value of the current that is supplied to the rotating electric machine 35. In FIGS. 4A and 4B, P represents the presence or absence of the operation the rider performs on the pedals 17a. As described above, the controller 30 determines the presence or absence of the operation of the pedals 17a based on the output of the torque sensor 42. In FIGS. 4C and 4D, P represents the torque that is detected by the torque sensor 42.

FIG. 4A is a diagram schematically showing an example of the relationship between time and power supplied to the rotating electric machine.

While the rider does not operate the pedals 17a (OFF), the controller 30 supplies a current to the rotating electric machine 35 in accordance with the amount of operation of the grips 23a (current value I₀). In the example shown in FIG. 4A, the riders operates the grips 23a to the maximum amount, and therefore the current value I₀ is the greatest current value outputtable in accordance with the output of the accelerator position sensor 41. Under a state where the torque sensor 42 detects no torque, the controller 30 does not supply any current having a current value greater than the current value I₀ to the rotating electric machine 35.

While the operation the rider performs on the pedals 17a is detected by the torque sensor 42 (ON), the controller 30 supplies a current from the battery 33 to the rotating electric machine 35 in such a manner that a high current value (I₁) and a low current value (I₂) are alternately repeated in the rotating electric machine 35 and additionally in such a manner that the high current value (I₁) exceeds the current value (I₀) that has been supplied to the rotating electric machine 35 in accordance with the output of the accelerator position sensor 41 at a time point of state shifting from a state where the current is supplied from the battery 33 to the rotating electric machine 35 in accordance with the output of the accelerator position sensor 41 to a state where the high current value and the low current value are alternately repeated in the rotating electric machine 35 in accordance with the output of the torque sensor 42. An average value (Iₐᵥ) of the current supplied while the high current value (I₁) and the low current value (I₂) are alternately repeated in the rotating electric machine 35 is more than the last current value (I₀). The average value Iₐᵥ of the current is a time average value. More specifically, the average value Iₐᵥ is a value obtained by dividing, by time, a result of time integration of the current value. Traveling under a low speed and a high load occurs at a limited frequency as compared with normal traveling. Therefore, even when the average value Iₐᵥ of the current exceeds the current value I₀, the durability of the rotating electric machine 35 is sufficiently ensured. Here, it should be noted that the average value Iₐᵥ of the current may be either equal to or less than the current value I₀.

To prevent occurrence of a failure due to heat generation, a maximum value of the current that can be continuously supplied to the rotating electric machine 35 is limited. However, at least under a low speed and a high load, the controller 30 increases and decreases the intensity of the current that is supplied to the rotating electric machine 35 in such a manner that the high current value (I₁) and the low current value (I₂) are alternately repeated while the rider is operating the pedals 17a. Accordingly, even though a large amount of heat is generated in the rotating electric machine 35 at a time when the current value is the high current value, the high current value and the low current value are alternately repeated, so that heat generation in the rotating electric machine 35 is suppressed at a time when the current value is the low current value. Additionally, the current supplied when the rider does not operate the pedals 17a has a smaller current value than the high current value. As a result, excessive heat generation in the rotating electric machine 35 can be prevented. Thus, it is possible to make the high current value (I₁) greater than the current value I₀.

In the example shown in FIG. 4A, the high current value and the low current value are regularly repeated, but in the present invention, the high current value and the low current value may be irregularly repeated.

In the example shown in FIG. 4A, in the course of alternately repeating the high current value and the low current value, the current values I₁ and I₂ are constant. However, it is not always necessary that the current values I₁ and I₂ are constant.

In the example shown in FIG. 4A, in the course of alternately repeating the high current value and the low current value, the current value has a circular-arc waveform curved upward. However, the waveform of the current value is not particularly limited.

In the example shown in FIG. 4A, the current supplied to the rotating electric machine 35 satisfies I₂=I₀. Instead, it may be acceptable that the current value supplied to the rotating electric machine 35 is set so as to satisfy I₂>I₀. Since the high current value and the low current value are alternately repeated while the rider is operating the pedals 17a, a time period during which the high current value and the low current value are alternately repeated in traveling is limited. Therefore, even when the current value is set so as to satisfy I₂>I₀, the durability of the rotating electric machine 35 is sufficiently ensured. It may be also acceptable that the current supplied to the rotating electric machine 35 satisfies I₂<I₀. A case where the current value satisfies I₂<I₀ will be described with reference to FIG. 4B.

FIG. 4B is a diagram schematically showing an example of the relationship between time and power supplied to the rotating electric machine. In the example shown in FIG. 4B, the current value satisfies I₁>I₀>I₂. Since the current value satisfies I₂<I₀, heat generation in the rotating electric machine 35 is more effectively suppressed at a time of the low current value. This allows the current value I₁ to be set higher. Thus, a higher torque can be obtained. Here, the current value I₂ may be zero. The average value (Iₐᵥ) of the current supplied while the high current value (I₁) and the low current value (I₂) are alternately repeated in the rotating electric machine 35 is more than the last current value (I₀). Therefore, a higher torque can be obtained.

Preferably, the amount of power supplied to the rotating electric machine 35 in the course of alternately repeating the high current value and the low current value in the rotating electric machine 35 is larger than the amount of power supplied to the rotating electric machine 35 while the pedals 17a are not being operated. The reason therefor is as follows. Since heat generation in the rotating electric machine 35 is suppressed at a time of the low current value (I₂), it is possible to supply a larger amount of power to the rotating electric machine 35 with suppression of occurrence of a failure due to heat generation. The amount of power supplied to the rotating electric machine 35 in the course of alternately repeating the high current value and the low current value in the rotating electric machine 35 is calculated based on a length of time including a time period during which the current value is the high current value and a time period during which the current value is the low current value. However, in the present invention, the amount of power is not limited to this example.

FIG. 4C is a diagram schematically showing an example of the relationship between time and power supplied to the rotating electric machine.

In FIGS. 4A and 4B, the high current value and the low current value are alternately repeated while the rider is operating the pedals 17a. On the other hand, in FIG. 4C, the high current value and the low current value are repeated in conformity with the magnitude of the torque that is indicated by the output of the torque sensor 42.

In a case where the rider continuously operates the pedals 17a, the magnitude of the torque detected by the torque sensor 42 changes, as shown in FIG. 4C. U represents a point at which the torque detected by the torque sensor 42 reaches its maximum value. L represents a point (the top dead center and the bottom dead center) at which the torque detected by the torque sensor 42 reaches its minimum value.

In the example shown in FIG. 4C, the controller 30 increases and decreases the intensity of the current that is supplied from the battery 33 to the rotating electric machine 35 in conformity with the magnitude of the output of the torque sensor 42. To be specific, when the torque detected by the torque sensor 42 is the maximum (U), the controller 30 supplies the high current value (I₁) to the rotating electric machine 35. On the other hand, when the torque detected by the torque sensor 42 is the minimum (L), the controller 30 supplies the low current value (I₂) to the rotating electric machine 35. The average value (Iₐᵥ) of the current supplied while the high current value (I₁) and the low current value (I₂) are alternately repeated in the rotating electric machine 35 is more than the last current value (I₀).

The output of the torque sensor 42 is repeatedly increased and decreased in accordance with the operation the rider performs on the pedals 17a. Since the controller 30 alternately repeats the high current value and the low current value in the rotating electric machine 35 in the above-described manner, the intensity of the current supplied from the battery 33 to the rotating electric machine 35 can be increased and decreased in conformity with the increase and decrease in the output of the torque sensor 42.

In the example shown in FIG. 4C, a timing when the output of the torque sensor 42 increases is substantially coincident with a timing when the intensity of the current supplied from the battery 33 to the rotating electric machine 35 increases. Accordingly, when the rider strongly operates the pedals 17a, a high torque occurs. As a result, the rider is less likely to feel a change in the riding comfort. Even if the rider feels a change in the riding comfort, such a change is not often recognized as uncomfortableness.

Moreover, in the example shown in FIG. 4C, the torque inputted to the pedals 17a is transmitted to the rear wheel 12. When the intensity of the current supplied to the rotating electric machine 35 increases, the pedaling force inputted to the pedals 17a also increases. As a result, the highest torque, which is obtained at a time when the current value is the high current value, is further increased. Therefore, a higher torque can be ensured when the speed is low and the load is high. In the present invention, it is not always necessary that the torque inputted to the pedals 17a is transmitted to the rear wheel 12.

FIG. 4D is a diagram schematically showing an example of the relationship between time and power supplied to the rotating electric machine.

In the example shown in FIG. 4D, unlike the example shown in FIG. 4C, a timing when the output of the torque sensor 42 increases is coincident with a timing when the intensity of the current supplied from the battery 33 to the rotating electric machine 35 decreases. Additionally, a timing when the output of the torque sensor 42 decreases is substantially coincident with a timing when the intensity of the current supplied from the battery 33 to the rotating electric machine 35 increases. In this case as well, the timings when the output of the torque sensor 42 increases and decreases are coincident with the timings when the intensity of the current supplied from the battery 33 to the rotating electric machine 35 increases and decreases. Accordingly, the rider is less likely to feel a change in the riding comfort. Even if the rider feels a change in the riding comfort, such a change is not often recognized as uncomfortableness.

In this embodiment, the torque inputted to the pedals 17a is transmitted to the rear wheel 12. Normally, the pedaling force the rider gives to the pedals 17a is reduced at the top dead center and the bottom dead center of the pedals 17a. Therefore, under a low speed and a high load, operating the pedals 17a at the top dead center and the bottom dead center of the pedals 17a can be a burden to the rider. In this respect, in the example shown in FIG. 4D, when the output of the torque sensor 42 decreases, the intensity of the current supplied from the battery 33 to the rotating electric machine 35 increases. This can ensure a torque under a low speed and a high load, to make it easy to operate the pedals 17a at the top dead center and the bottom dead center of the pedals 17a. In the present invention, it is not always necessary that the torque inputted to the pedals 17a is transmitted to the rear wheel 12.

Next, the travel performance under a low speed and a high load will be described.

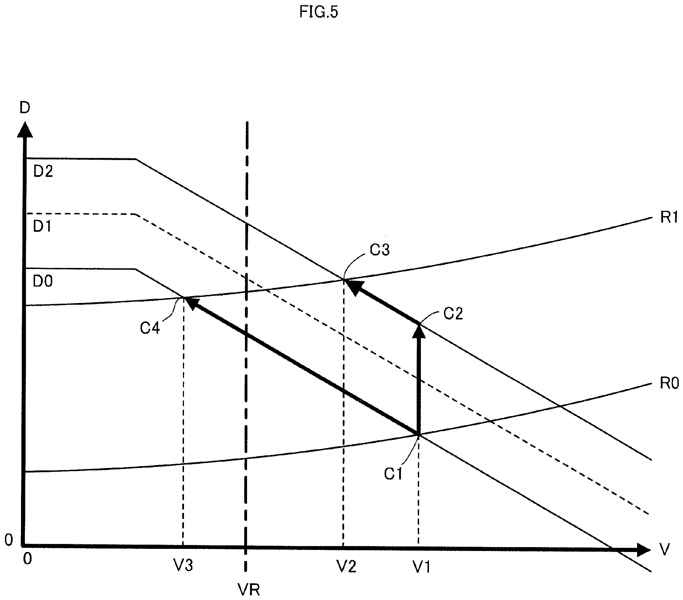

FIG. 5 is a diagram schematically showing a travel performance curve of the electric motorcycle.

The travel performance curve shown in FIG. 5 indicates the relationship among a travel resistance R, a driving force D, and the speed V under the condition that the total weight of the electric motorcycle and the rider has a predetermined value.

In FIG. 5, a travel resistance R0 indicates a travel resistance at a time of traveling on a flat road. A travel resistance R1 indicates a travel resistance at a time of traveling on a raised step. A driving force D0 indicates a driving force at a time of traveling based on the operation of the grips 23a under a state where the pedals 17a are not operated. Driving forces D1 and D2 indicate the driving forces at a time when the pedals 17a are operated under a state where the grips 23a are operated. More specifically, the driving force D1 indicates the value obtained by adding, to the driving force D0, a driving force transmitted from the pedals 17a to the rear wheel 12. The driving force D2 indicates the value obtained by adding, to the driving force D1, a driving force caused when the current is controlled in such a manner that the high current value and the low current value are repeated in accordance with the amount of operation of the pedals 17a. VR indicates one example of the lowest speed that enables the electric motorcycle to travel by itself. When the vehicle speed is equal to or higher than VR, the electric motorcycle is able to travel while maintaining balance, while when the vehicle speed is lower than VR, it is difficult for the electric motorcycle to smoothly travel while maintaining balance.

Firstly, a case where the rider does not operate the pedals 17a will be described. For example, when the electric motorcycle 10 travels on the flat road (travel resistance R0) based on the operation of the grips 23a under a state where the pedals 17a are not operated, the driving force is D0 and therefore the speed is V1 (C1 in FIG. 5). When the electric motorcycle 10 traveling under such a state is passing over a raised step, the travel resistance is changed from R0 to R1 while the driving force is kept to be D0 (C4 in FIG. 5). As a result, the speed drops to V3. Since the speed V3 is lower than the speed VR, it is difficult for the electric motorcycle 10 to smoothly travel while maintaining balance. That is, in a case where the pedals 17a are not operated, the vehicle speed drops from V1 to V3 when passing over a step, which hinders the electric motorcycle 10 from smoothly passing over this step.

Next, a case where the rider operates the pedals 17a will be described.

The rider can recognize that a step exists ahead during traveling. Therefore, the rider can start to turn the pedals 17a when reaching a step. As a result, a torque inputted to the pedals 17a is at least partially transmitted to the rear wheel 12 (D1). Additionally, a high current and a low current are repeatedly supplied to the rotating electric machine 35 in accordance with the amount of torque inputted to the pedals 17a (D2). As a result, the driving force increases from D0 to D2 (C2 in FIG. 5). Since the driving force is D2 and the travel resistance is R1, the vehicle speed drops to V2 (C3 in FIG. 5). The speed V2 is equal to or higher than speed VR. Therefore, the electric motorcycle 10 is able to continuously travel while maintaining balance. That is, in a case where the pedals 17a are operated, the vehicle speed drops from V1 merely to V2 when passing over a step. Therefore, the electric motorcycle 10 is able to pass over this step.

As thus far described, in the electric motorcycle 10, at least under a low speed and a high load, the intensity of the current supplied to the rotating electric machine 35 is increased and decreased in such a manner that the high current value and the low current value are repeated in the rotating electric machine 35 in accordance with the intention of the rider who has operated the pedals 17a. Accordingly, as described above, uncomfortableness felt by the rider because of a fluctuation in the acceleration can be suppressed, and at the same time an adequate torque can be outputted under a low speed and a high load, and additionally the possible travel distance of the electric vehicle obtained per charging can be prolonged.

While this embodiment has been described above, this embodiment is merely one preferred embodiment of the present invention. It is apparent that those skilled in the art can readily make various modifications or changes to this embodiment. Thus, the technical scope of the present invention is defined based on the scope of claims. The present invention is not limited to this embodiment, but may be changed, for example, as follows.

In this embodiment, in accordance with the output of the torque sensor 42 and irrespective of whether or not the current state is under a low speed and a high load, the controller 30 increases and decreases the intensity of the current that is supplied to the rotating electric machine 35 in such a manner that the high current value and the low current value are alternately repeated in the rotating electric machine 35. However, in the present invention, it suffices that, at least under a low speed and a high load, the controller 30 is configured to alternately repeat the high current value and the low current value in the rotating electric machine. For example, in a possible configuration, the controller 30 may, only under a low speed and a high load, increase and decrease the intensity of the current that is supplied to the rotating electric machine 35 in accordance with the output of the torque sensor 42. In this case, the controller 30 can determine whether or not the current state is under a low speed and a high load, based on the vehicle speed of the electric motorcycle 10 detected by the vehicle speed sensor 43 and the current value supplied to the rotating electric machine 35. For the determination of whether or not the current state is under a low speed and a high load, the number of rotations of the rotating electric machine 35 may be used instead of the vehicle speed of the electric motorcycle 10.

In a case illustrated in this embodiment, the state of being under a low speed and a high load is a state where the torque is equal to or higher than T_{P} and additionally the speed is equal to or lower than V_{P}. However, the present invention is not limited to this example. For example, a state where the amount of operation of the grips 23a is maximum and additionally the speed is equal to or lower than V_{P} may be set as the state of being under a low speed and a high load.

In this embodiment, a ferrite magnet is adopted as a permanent magnet. The permanent magnet of the present invention is not particularly limited. In the present invention, a neodymium magnet is also adoptable. Using a neodymium magnet can solve the problems described above. However, using a ferrite magnet or a neodymium bonded magnet can achieve the following effects at a higher level: uncomfortableness felt by the rider because of a fluctuation in the acceleration can be suppressed, and at the same time an adequate torque can be outputted under a low speed and a high load, and additionally the possible travel distance of the electric vehicle obtained per charging can be prolonged.

In the electric motorcycle 10, at least under a low speed and a high load, when the operation the rider performs on the pedals 17a (current control input member) is detected by the torque sensor 42 (current control input detection part), the controller 30 controls the current so as to alternately repeat the high current value and the low current value in the rotating electric machine 35. No other operation is required for switching whether or not to perform this control. In the electric motorcycle 10, a mode of performing this control and a mode of not performing this control are not set, and switching these modes is not made.

Moreover, in the electric motorcycle 10, the amount of operation of the grips 23a (accelerator operator) means a difference between an initial value (the amount of operation = 0) and a value obtained after the operation. For example, in a case where the rider keeps holding the grips 23a such that the amount of operation of the grips 23a constantly has a predetermined value, the difference between the initial value and the value obtained after the operation does not change. In such a case, a current in accordance with the predetermined value is continuously supplied to the rotating electric machine 35. On the other hand, the amount of change (the amount of increase or the amount of decrease) in the torque that is inputted to the pedals 17a (current control input member) means the amount of change per unit time (time differential value). For example, in a case where the rider keeps operating the pedals 17a such that the pedals 17a stop at a predetermined position, the amount of change per unit time is zero. In such a case, the current supplied to the rotating electric machine does not change.

While illustrative embodiments of the invention have been described herein, the present invention is not limited to the various preferred embodiments described herein, but includes any and all embodiments having equivalent elements, modifications, omissions, combinations (e.g., of aspects across various embodiments), adaptations and/or alterations as would be appreciated by those in the art based on the present disclosure. The limitations in the claims are to be interpreted broadly based on the language employed in the claims and not limited to examples described in the present specification or during the prosecution of the application, which examples are to be construed as non-exclusive. For example, in the present disclosure, the term "preferably" is non-exclusive and means "preferably, but not limited to."

### [DESCRIPTION OF THE REFERENCE SIGNS]

- 10: electric motorcycle
- 12: rear wheel (wheel)
- 17a: pedal (current control input member)
- 23a: grip (accelerator operator)
- 30: controller (control device)
- 33: battery
- 35: rotating electric machine
- 41: accelerator position sensor (accelerator operation detection part)
- 42: torque sensor (current control input detection part)
- 43: vehicle speed sensor
- 44: brake sensor
- 45: power switch

## Claims

1. A driving apparatus for use in electric vehicle (10),
the driving apparatus comprising:
a rotating electric machine (35) including a permanent magnet, the rotating electric machine (35) configured to drive a wheel (12) that is rotatably mounted to a vehicle body (10a);
an accelerator operator (23a) configured to be operated by a rider;
an accelerator operation detection part (41) that is configured to detect a state of the accelerator operator (23a);
a current control input member (17a) configured to be operated by the rider;
a current control input detection part (42) configured to detect a state of the current control input member (17a); and
a control device (30) configured to supply a current from a battery (33) to the rotating electric machine (35) in accordance with an output of the accelerator operation detection part (41), the control device (30) being configured to, at least under a low speed and a high load, supply a current from the battery (33) to the rotating electric machine (35) in such a manner that, when an operation the rider performs on the current control input member (17a) is detected by the current control input detection part (42), a high current value and a low current value are alternately repeated in the rotating electric machine (35) in accordance with an output of the current control input detection part (42) and additionally in such a manner that the high current value exceeds a current value that has been supplied to the rotating electric machine (35) in accordance with the output of the accelerator operation detection part (41) at a time point of state shifting from a state where a current is supplied from the battery (33) to the rotating electric machine (35) in accordance with the output of the accelerator operation detection part (41) to a state where the high current value and the low current value are alternately repeated in the rotating electric machine (35) in accordance with the output of the current control input detection part (42).

2. The driving apparatus for use in electric vehicle (10) according to claim 1, wherein
when, starting from a state where at least an operation the rider performs on the current control input member (17a) is not detected by the current control input detection part (42), an operation the rider performs on the current control input member (17a) is detected by the current control input detection part (42) and at the same time a current having a maximum value suppliable in accordance with the output of the accelerator operation detection part (41) is supplied to the rotating electric machine (35), the control device (30) is configured to supply a current from the battery (33) to the rotating electric machine (35) in such a manner that the high current value exceeds the maximum value.

3. The driving apparatus for use in electric vehicle (10) according to claim 2, wherein
when, starting from a state where at least an operation the rider performs on the current control input member (17a) is not detected by the current control input detection part (42), an operation the rider performs on the current control input member (17a) is detected by the current control input detection part (42) and at the same time a current having a maximum value suppliable in accordance with the output of the accelerator operation detection part (41) is supplied to the rotating electric machine (35), the control device (30) is configured to supply a current from the battery (33) to the rotating electric machine (35) in such a manner that the average of the alternately repeated high and low current values exceeds the maximum value.

4. The driving apparatus for use in electric vehicle (10) according to any one of claims 1 to 3, wherein
the current control input detection part (42) is configured such that the magnitude of an output value of the current control input detection part (42) changes in accordance with a change in the amount of operation the rider performs on the current control input member (17a),
when the amount of operation the rider performs on the current control input member (17a) is repeatedly increased and decreased under a condition that, at least under a low speed and a high load, a current is supplied from the battery (33) to the rotating electric machine (35) in accordance with the output of the accelerator operation detection part (41) and at the same time the current control input member (17a) is operated by the rider so that a current is supplied to the rotating electric machine (35) in accordance with the output of the current control input detection part (42), the control device (30) is configured to perform a control such that a timing when the rotating electric machine (35) has supplied thereto a current having a higher current value than a current value that has been supplied to the rotating electric machine (35) in accordance with the output of the accelerator operation detection part (41) at a time point of state shifting from a state where a current is supplied from the battery (33) to the rotating electric machine (35) in accordance with the output of the accelerator operation detection part (41) to a state where the high current value and the low current value are alternately repeated in the rotating electric machine (35) in accordance with the output of the current control input detection part (42), is coincident with a timing when the output value of the current control input detection part (42) fluctuates.

5. The driving apparatus for use in electric vehicle (10) according to claim 4, wherein
the current control input detection part (42) is configured to detect a force the rider gives to the current control input member (17a), and configured such that the magnitude of an output value of the current control input detection part (42) changes in accordance with a change in the force given to the current control input member (17a),
when the force the rider gives to the current control input member (17a) is repeatedly increased and decreased under a condition that, at least under a low speed and a high load, a current is supplied from the battery (33) to the rotating electric machine (35) in accordance with the output of the accelerator operation detection part (41) and at the same time the current control input member (17a) is operated by the rider so that a current is supplied to the rotating electric machine (35) in accordance with the output of the current control input detection part (42), the control device (30) is configured to perform a control such that a timing when the rotating electric machine (35) has supplied thereto a current having a higher current value than a current value that has been supplied to the rotating electric machine (35) in accordance with the output of the accelerator operation detection part (41) at a time point of state shifting from a state where a current is supplied from the battery (33) to the rotating electric machine (35) in accordance with the output of the accelerator operation detection part (41) to a state where the high current value and the low current value are alternately repeated in the rotating electric machine (35) in accordance with the output of the current control input detection part (42), is coincident with a timing when the output value of the current control input detection part (42) fluctuates.

6. The driving apparatus for use in electric vehicle (10) according to any one of claims 1 to 5, wherein
the permanent magnet is a ferrite magnet or a neodymium bonded magnet.

7. The driving apparatus for use in electric vehicle (10) according to any one of claims 1 to 6, wherein
the rotating electric machine (35) is configured to transmit power directly to a wheel (12) without interposition of a power transmission mechanism.

8. The driving apparatus for use in electric vehicle (10) according to any one of claims 1 to 7, wherein
the driving apparatus includes a power transmission mechanism for transmitting, to a wheel (12), a force the rider gives to the current control input member (17a),
when, at least under a low speed and a high load, a current is supplied from the battery (33) to the rotating electric machine (35) in accordance with the output of the accelerator operation detection part (41) and at the same time the current control input member (17a) is operated by the rider so that a current is supplied to the rotating electric machine (35) in accordance with the output of the current control input detection part (42), and at the same time the force given to the current control input member (17a) is transmitted to the wheel (12), the control device (30) is configured to supply, to the rotating electric machine (35), a current having a higher current value than a current value that has been supplied to the rotating electric machine (35) in accordance with the output of the accelerator operation detection part (41) at a time point of state shifting from a state where a current is supplied from the battery (33) to the rotating electric machine (35) in accordance with the output of the accelerator operation detection part (41) to a state where the high current value and the low current value are alternately repeated in the rotating electric machine (35) in accordance with the output of the current control input detection part (42).

9. The driving apparatus for use in electric vehicle (10) according to any one of claims 1 to 7, wherein
the driving apparatus includes a power transmission mechanism for transmitting, to a wheel (12), a force the rider gives to the current control input member (17a),
when, at least under a low speed and a high load, a current is supplied from the battery (33) to the rotating electric machine (35) in accordance with the output of the accelerator operation detection part (41) and at the same time the current control input member (17a) is operated by the rider so that a current is supplied to the rotating electric machine (35) in accordance with the output of the current control input detection part (42), and at the same time the force given to the current control input member (17a) is not transmitted to the wheel (12), the control device (30) is configured to supply, to the rotating electric machine (35), a current having a higher current value than a current value that has been supplied to the rotating electric machine (35) in accordance with the output of the accelerator operation detection part (41) at a time point of state shifting from a state where a current is supplied from the battery (33) to the rotating electric machine (35) in accordance with the output of the accelerator operation detection part (41) to a state where the high current value and the low current value are alternately repeated in the rotating electric machine (35) in accordance with the output of the current control input detection part (42).

10. An electric vehicle (10),
the electric vehicle (10) comprising:
a vehicle body (10a);
a wheel (12) that is rotatably mounted to the vehicle body (10a); and
the driving apparatus for use in electric vehicle (10) according to any one of claims 1 to 9.

## Patentansprüche

1. Eine Antriebsvorrichtung zur Verwendung bei einem Elektrofahrzeug (10),
wobei die Antriebsvorrichtung folgende Merkmale aufweist:
eine drehende Elektromaschine (35), die einen Permanentmagnet umfasst, wobei die drehende Elektromaschine (35) dazu konfiguriert ist, ein Rad (12) anzutreiben, das drehbar an einem Fahrzeugaufbau (10a) befestigt ist;
einen Gashebelbetätiger (23a), der dazu konfiguriert ist, durch einen Fahrer betätigt zu werden;
ein Gashebelbetätigungs-Erfassungsbauteil (41), das dazu konfiguriert ist, einen Zustand des Gashebelbetätigers (23a) zu erfassen;
ein Stromsteuerungseingabebauglied (17a), das dazu konfiguriert ist, durch den Fahrer betätigt zu werden;
ein Stromsteuerungseingabe-Erfassungsbauteil (42), das dazu konfiguriert ist, einen Zustand des Stromsteuerungseingabebauglieds (17a) zu erfassen; und
eine Steuereinrichtung (30), die dazu konfiguriert ist, der drehenden Elektromaschine (35) gemäß einer Ausgabe des Gashebelbetätigungs-Erfassungsbauteils (41) einen Strom von einer Batterie (33) zuzuführen, wobei die Steuereinrichtung (30) dazu konfiguriert ist, zumindest bei niedriger Geschwindigkeit und hoher Last, der drehenden Elektromaschine (35) einen Strom von der Batterie (33) derart zuzuführen, dass, wenn eine durch den Fahrer an dem Stromsteuerungseingabebauglied (17a) durchgeführte Betätigung durch das Stromsteuerungseingabe-Erfassungsbauteil (42) erfasst wird, ein hoher Stromwert und ein niedriger Stromwert in der drehenden Elektromaschine (35) gemäß einer Ausgabe des Stromsteuerungseingabe-Erfassungsbauteils (42) abwechselnd wiederholt werden, und außerdem derart, dass der hohe Stromwert einen Stromwert übersteigt, der der drehenden Elektromaschine (35) zu einem Zeitpunkt eines Zustandswechsels von einem Zustand, bei dem der drehenden Elektromaschine (35) gemäß der Ausgabe des Gashebelbetätigungs-Erfassungsbauteils (41) ein Strom von der Batterie (33) zugeführt wird, zu einem Zustand, bei dem der hohe Stromwert und der niedrige Stromwert in der drehenden Elektromaschine (35) gemäß der Ausgabe des Stromsteuerungseingabe-Erfassungsbauteils (42) abwechselnd wiederholt werden, gemäß der Ausgabe des Gashebelbetätigungs-Erfassungsbauteils (41) zugeführt worden ist.

2. Die Antriebsvorrichtung zur Verwendung bei einem Elektrofahrzeug (10) gemäß Anspruch 1, bei der,
wenn ausgehend von einem Zustand, bei dem zumindest eine durch den Fahrer an dem Stromsteuerungseingabebauglied (17a) durchgeführte Betätigung nicht durch das Stromsteuerungseingabe-Erfassungsbauteil (42) erfasst wird, eine durch den Fahrer an dem Stromsteuerungseingabebauglied (17a) durchgeführte Betätigung durch das Stromsteuerungseingabe-Erfassungsbauteil (42) erfasst wird und gleichzeitig der drehenden Elektromaschine (35) ein Strom mit einem Höchstwert zugeführt wird, der gemäß der Ausgabe des Gashebelbetätigungs-Erfassungsbauteils (41) zuführbar ist, die Steuereinrichtung (30) dazu konfiguriert ist, der drehenden Elektromaschine (35) einen Strom von der Batterie (33) derart zuzuführen, dass der hohe Stromwert den Höchstwert übersteigt.

3. Die Antriebsvorrichtung zur Verwendung bei einem Elektrofahrzeug (10) gemäß Anspruch 2, bei der,
wenn ausgehend von einem Zustand, bei dem zumindest eine durch den Fahrer an dem Stromsteuerungseingabebauglied (17a) durchgeführte Betätigung nicht durch das Stromsteuerungseingabe-Erfassungsbauteil (42) erfasst wird, eine durch den Fahrer an dem Stromsteuerungseingabebauglied (17a) durchgeführte Betätigung durch das Stromsteuerungseingabe-Erfiassungsbauteil (42) erfasst wird und gleichzeitig der drehenden Elektromaschine (35) ein Strom mit einem Höchstwert zugeführt wird, der gemäß der Ausgabe des Gashebelbetätigungs-Erfassungsbauteils (41) zuführbar ist, die Steuereinrichtung (30) dazu konfiguriert ist, der drehenden Elektromaschine (35) einen Strom von der Batterie (33) derart zuzuführen, dass der Mittelwert des abwechselnd wiederholten hohen und niedrigen Stromwerts den Höchstwert übersteigt.

4. Die Antriebsvorrichtung zur Verwendung bei einem Elektrofahrzeug (10) gemäß einem der Ansprüche 1 bis 3, bei der
das Stromsteuerungseingabe-Erfassungsbauteil (42) derart konfiguriert ist, dass die Magnitude eines Ausgabewerts des Stromsteuerungseingabe-Erfassungsbauteils (42) sich gemäß einer Änderung des Betrags der durch den Fahrer an dem Stromsteuerungseingabebauglied (17a) durchgeführten Betätigung ändert,
wenn der Betrag der durch den Fahrer an dem Stromsteuerungseingabebauglied (17a) durchgeführten Betätigung unter einer Bedingung wiederholt erhöht und verringert wird, dass, zumindest bei niedriger Geschwindigkeit und hoher Last, der drehenden Elektromaschine (35) gemäß der Ausgabe des Gashebelbetätigungs-Erfassungsbauteils (41) ein Strom von der Batterie (33) zugeführt wird und gleichzeitig das Stromsteuerungseingabebauglied (17a) durch den Fahrer so betätigt wird, dass der drehenden Elektromaschine (35) gemäß der Ausgabe des Stromsteuerungseingabe-Erfassungsbauteils (42) ein Strom zugeführt wird, die Steuereinrichtung (30) dazu konfiguriert ist, eine Steuerung derart durchzuführen, dass eine Zeitgebung, zu der die drehende Elektromaschine (35) derselben einen Strom zugeführt hat, der einen höheren Stromwert aufweist als ein Stromwert, der der drehenden Elektromaschine (35) zu einem Zeitpunkt eines Zustandswechsels von einem Zustand, bei dem der drehenden Elektromaschine (35) gemäß der Ausgabe des Gashebelbetätigungs-Erfassungsbauteils (41) ein Strom von der Batterie (33) zugeführt wird, zu einem Zustand, bei dem der hohe Stromwert und der niedrige Stromwert in der drehenden Elektromaschine (35) gemäß der Ausgabe des Stromsteuerungseingabe-Erfassungsbauteils (42) abwechselnd wiederholt werden, gemäß der Ausgabe des Gashebelbetätigungs-Erfassungsbauteils (41) zugeführt worden ist, mit einer Zeitgebung zusammenfällt, zu der der Ausgabewert des Stromsteuerungseingabe-Erfassungsbauteils (42) schwankt.

5. Die Antriebsvorrichtung zur Verwendung bei einem Elektrofahrzeug (10) gemäß Anspruch 4, bei der
das Stromsteuerungseingabe-Erfassungsbauteil (42) dazu konfiguriert ist, eine durch den Fahrer auf das Stromsteuerungseingabebauglied (17a) ausgeübte Kraft zu erfassen, und derart konfiguriert ist, dass die Magnitude eines Ausgabewerts des Stromsteuerungseingabe-Erfassungsbauteils (42) sich gemäß einer Änderung der auf das Stromsteuerungseingabebauglied (17a) ausgeübten Kraft ändert,
wenn die durch den Fahrer auf das Stromsteuerungseingabebauglied (17a) ausgeübte Kraft unter einer Bedingung wiederholt erhöht und verringert wird, dass, zumindest bei niedriger Geschwindigkeit und hoher Last, der drehenden Elektromaschine (35) gemäß der Ausgabe des Gashebelbetätigungs-Erfassungsbauteils (41) ein Strom von der Batterie (33) zugeführt wird und gleichzeitig das Stromsteuerungseingabebauglied (17a) durch den Fahrer so betätigt wird, dass der drehenden Elektromaschine (35) gemäß der Ausgabe des Stromsteuerungseingabe-Erfassungsbauteils (42) ein Strom zugeführt wird, die Steuereinrichtung (30) dazu konfiguriert ist, eine Steuerung derart durchzuführen, dass eine Zeitgebung, zu der die drehende Elektromaschine (35) derselben einen Strom zugeführt hat, der einen höheren Stromwert aufweist als ein Stromwert, der der drehenden Elektromaschine (35) zu einem Zeitpunkt eines Zustandswechsels von einem Zustand, bei dem der drehenden Elektromaschine (35) gemäß der Ausgabe des Gashebelbetätigungs-Erfassungsbauteils (41) ein Strom von der Batterie (33) zugeführt wird, zu einem Zustand, bei dem der hohe Stromwert und der niedrige Stromwert in der drehenden Elektromaschine (35) gemäß der Ausgabe des Stromsteuerungseingabe-Erfassungsbauteils (42) abwechselnd wiederholt werden, gemäß der Ausgabe des Gashebelbetätigungs-Erfassungsbauteils (41) zugeführt worden ist, mit einer Zeitgebung zusammenfällt, zu der der Ausgabewert des Stromsteuerungseingabe-Erfassungsbauteils (42) schwankt.

6. Die Antriebsvorrichtung zur Verwendung bei einem Elektrofahrzeug (10) gemäß einem der Ansprüche 1 bis 5, bei der
der Permanentmagnet ein Ferritmagnet oder ein Neodym-gebundener Magnet ist.

7. Die Antriebsvorrichtung zur Verwendung bei einem Elektrofahrzeug (10) gemäß einem der Ansprüche 1 bis 6, bei der
die drehende Elektromaschine (35) dazu konfiguriert ist, eine Leistung ohne Zwischenschaltung eines Leistungsübertragungsmechanismus direkt auf ein Rad (12) zu übertragen.

8. Die Antriebsvorrichtung zur Verwendung bei einem Elektrofahrzeug (10) gemäß einem der Ansprüche 1 bis 7, bei der
die Antriebsvorrichtung einen Leistungsübertragungsmechanismus zum Übertragen einer durch den Fahrer auf das Stromsteuerungseingabebauglied (17a) ausgeübten Kraft auf ein Rad (12) umfasst,
wenn, zumindest bei niedriger Geschwindigkeit und hoher Last, der drehenden Elektromaschine (35) gemäß der Ausgabe des Gashebelbetätigungs-Erfassungsbauteils (41) ein Strom von der Batterie (33) zugeführt wird und gleichzeitig das Stromsteuerungseingabebauglied (17a) durch den Fahrer so betätigt wird, dass der drehenden Elektromaschine (35) gemäß der Ausgabe des Stromsteuerungseingabe-Erfasssungsbauteils (42) ein Strom zugeführt wird und gleichzeitig die auf das Stromsteuerungseingabebauglied (17a) ausgeübte Kraft auf das Rad (12) übertragen wird, die Steuereinrichtung (30) dazu konfiguriert ist, der drehenden Elektromaschine (35) einen Strom zuzuführen, der einen höheren Stromwert aufweist als ein Stromwert, der der drehenden Elektromaschine (35) zu einem Zeitpunkt eines Zustandswechsels von einem Zustand, bei dem der drehenden Elektromaschine (35) gemäß der Ausgabe des Gashebelbetätigungs-Erfassungsbauteils (41) ein Strom von der Batterie (33) zugeführt wird, zu einem Zustand, bei dem der hohe Stromwert und der niedrige Stromwert in der drehenden Elektromaschine (35) gemäß der Ausgabe des Stromsteuerungseingabe-Erfassungsbauteils (42) abwechselnd wiederholt werden, gemäß der Ausgabe des Gashebelbetätigungs-Erfassungsbauteils (41) zugeführt worden ist.

9. Die Antriebsvorrichtung zur Verwendung bei einem Elektrofahrzeug (10) gemäß einem der Ansprüche 1 bis 7, bei der
die Antriebsvorrichtung einen Leistungsübertragungsmechanismus zum Übertragen einer durch den Fahrer auf das Stromsteuerungseingabebauglied (17a) ausgeübten Kraft auf ein Rad (12) umfasst,
wenn, zumindest bei niedriger Geschwindigkeit und hoher Last, der drehenden Elektromaschine (35) gemäß der Ausgabe des Gashebelbetätigungs-Erfassungsbauteils (41) ein Strom von der Batterie (33) zugeführt wird und gleichzeitig das Stromsteuerungseingabebauglied (17a) durch den Fahrer so betätigt wird, dass der drehenden Elektromaschine (35) gemäß der Ausgabe des Stromsteuerungseingabe-Erfasssungsbauteils (42) ein Strom zugeführt wird und gleichzeitig die auf das Stromsteuerungseingabebauglied (17a) ausgeübte Kraft nicht auf das Rad (12) übertragen wird, die Steuereinrichtung (30) dazu konfiguriert ist, der drehenden Elektromaschine (35) einen Strom zuzuführen, der einen höheren Stromwert aufweist als ein Stromwert, der der drehenden Elektromaschine (35) zu einem Zeitpunkt eines Zustandswechsels, von einem Zustand, bei dem der drehenden Elektromaschine (35) gemäß der Ausgabe des Gashebelbetätigungs-Erfassungsbauteils (41) ein Strom von der Batterie (33) zugeführt wird, zu einem Zustand, bei dem der hohe Stromwert und der niedrige Stromwert in der drehenden Elektromaschine (35) gemäß der Ausgabe des Stromsteuerungseingabe-Errfassungsbauteils (42) abwechselnd wiederholt werden, gemäß der Ausgabe des Gashebelbetätigungs-Erfassungsbauteils (41) zugeführt worden ist.

10. Ein Elektrofahrzeug (10),
wobei das Elektrofahrzeug (10) folgende Merkmale aufweist:
einen Fahrzeugaufbau (10a);
ein Rad (12), das drehbar an dem Fahrzeugaufbau (10a) befestigt ist; und
die Antriebsvorrichtung zur Verwendung bei einem Elektrofahrzeug (10) gemäß einem der Ansprüche 1 bis 9.

## Revendications

1. Appareil d'entraînement destiné à être utilisé dans un véhicule électrique (10),
l'appareil d'entraînement comprenant:
une machine électrique rotative (35) comportant un aimant permanent, la machine électrique rotative (35) étant configurée pour entraîner une roue (12) montée de manière rotative sur une carrosserie de véhicule (10a);
un actionneur d'accélérateur (23a) configuré pour être actionné par un conducteur;
une partie de détection d'actionnement d'accélérateur (41) qui est configurée pour détecter un état d'actionnement de l'accélérateur (23a);
un élément d'entrée de commande de courant (17a) configuré pour être actionné par le conducteur;
une partie de détection d'entrée de commande de courant (42) configurée pour détecter un état de l'élément d'entrée de commande de courant (17a); et
un dispositif de commande (30) configuré pour alimenter un courant d'une batterie (33) à la machine électrique rotative (35) selon une sortie de la partie de détection d'actionnement d'accélérateur (41), le dispositif de commande (30) étant configuré pour alimenter, au moins à faible vitesse et haute charge, un courant de la batterie (33) à la machine électrique rotative (35) de sorte que, lorsqu'il est détecté par la partie de détection d'entrée de commande de courant (42) un actionnement réalisé par le conducteur sur l'élément d'entrée de commande de courant (17a), une haute valeur de courant et une faible valeur de courant sont répétées alternativement dans la machine électrique rotative (35) selon une sortie de la partie de détection d'entrée de commande de courant (42) et en outre de sorte que la haute valeur de courant excède une valeur de courant qui a été alimentée vers la machine électrique rotative (35) selon la sortie de la partie de détection d'actionnement d'accélérateur (41) à un moment de commutation d'état d'un état dans lequel un courant est alimenté de la batterie (33) à la machine électrique rotative (35) selon la sortie de la partie de détection d'actionnement d'accélérateur (41) à un état dans lequel la haute valeur de courant et la faible valeur de courant sont répétées alternativement dans la machine électrique rotative (35) selon la sortie de la partie de détection d'entrée de commande de courant (42).

2. Appareil d'entraînement destiné à être utilisé dans un véhicule électrique (10) selon la revendication 1, dans lequel
lorsque, partant d'un état dans lequel au moins un actionnement effectué par le conducteur sur l'élément d'entrée de commande de courant (17a) n'est pas détecté par la partie de détection d'entrée de commande de courant (42), un actionnement effectué par le conducteur sur l'élément d'entrée de commande de courant (17a) est détecté par la partie de détection d'entrée de commande de courant (42) et qu'en même temps un courant présentant une valeur maximale pouvant être alimenté selon la sortie de la partie de détection d'actionnement d'accélérateur (41) est alimenté vers la machine électrique rotative (35), le dispositif de commande (30) est configuré pour alimenter un courant de la batterie (33) à la machine électrique rotative (35) de sorte que la haute valeur de courant excède la valeur maximale.

3. Appareil d'entraînement destiné à être utilisé dans un véhicule électrique (10) selon la revendication 2, dans lequel
lorsque, partant d'un état dans lequel au moins un actionnement effectué par le conducteur sur l'élément d'entrée de commande de courant (17a) n'est pas détecté par la partie de détection d'entrée de commande de courant (42), un actionnement effectué par le conducteur sur l'élément d'entrée de commande de courant (17a) est détecté par la partie de détection d'entrée de commande de courant (42) et qu'en même temps un courant présentant une valeur maximale pouvant être alimenté selon la sortie de la partie de détection d'actionnement d'accélérateur (41) est alimenté vers la machine électrique rotative (35), le dispositif de commande (30) est configuré pour alimenter un courant de la batterie (33) à la machine électrique rotative (35) de sorte que la moyenne des haute et faible valeurs de courant répétées alternativement excède la valeur maximale.

4. Appareil d'entraînement destiné à être utilisé dans un véhicule électrique (10) selon l'une quelconque des revendications 1 à 3, dans lequel
la partie de détection d'entrée de commande de courant (42) est configurée de sorte que l'amplitude d'une valeur de sortie de la partie de détection d'entrée de commande de courant (42) varie selon une variation de la quantité d'actionnement effectué par le conducteur sur l'élément d'entrée de commande de courant (17a),
lorsque la quantité d'actionnement effectué par le conducteur sur l'élément d'entrée de commande de courant (17a) est augmentée et diminuée de manière répétée dans une condition telle que, au moins à faible vitesse et haute charge, un courant est alimenté de la batterie (33) à la machine électrique rotative (35) selon la sortie de la partie de détection d'actionnement d'accélérateur (41) et qu'en même temps l'élément d'entrée de commande de courant (17a) est actionné par le conducteur de sorte qu'un courant soit alimenté vers la machine électrique rotative (35) selon la sortie de la partie de détection d'entrée de commande de courant (42), le dispositif de commande (30) est configuré pour effectuer une commande telle qu'une synchronisation, lorsque la machine électrique rotative (35) lui a alimenté un courant présentant une valeur de courant plus haute qu'une valeur de courant qui a été alimenté vers la machine électrique rotative (35) selon la sortie de la partie de détection d'actionnement d'accélérateur (41) à un moment de commutation de l'état d'un état dans lequel un courant est alimenté de la batterie (33) à la machine électrique rotative (35) selon la sortie de la partie de détection d'actionnement d'accélérateur (41) à un état dans lequel la haute valeur de courant et la faible valeur de courant sont répétées alternativement dans la machine électrique rotative (35) selon la sortie de la partie de détection d'entrée de commande de courant (42), coïncide avec une synchronisation lorsque la valeur de sortie de la partie de détection d'entrée de commande de courant (42) fluctue.

5. Appareil d'entraînement destiné à être utilisé dans un véhicule électrique (10) selon la revendication 4, dans lequel
la partie de détection d'entrée de commande de courant (42) est configurée pour détecter une force que le conducteur applique à l'élément d'entrée de commande de courant (17a), et configurée de sorte que l'amplitude d'une valeur de sortie de la partie de détection d'entrée de commande de courant (42) varie selon une variation de la force appliquée à l'élément d'entrée de commande de courant (17a),
lorsque la force appliquée par le conducteur à l'élément d'entrée de commande de courant (17a) est augmentée et diminuée de manière répétée dans une condition telle que, au moins à faible vitesse et haute charge, un courant est alimenté de la batterie (33) à la machine électrique rotative (35) selon la sortie de la partie de détection d'actionnement d'accélérateur (41) et qu'en même temps l'élément d'entrée de commande de courant (17a) est actionné par le conducteur de sorte qu'un courant soit alimenté vers la machine électrique rotative (35) selon la sortie de la partie de détection d'entrée de commande de courant (42), le dispositif de commande (30) est configuré pour effectuer une commande telle qu'une synchronisation lorsque la machine électrique rotative (35) lui a alimenté un courant présentant une valeur de courant plus haute qu'une valeur de courant qui a été alimenté vers la machine électrique rotative (35) selon la sortie de la partie de détection d'actionnement d'accélérateur (41) à un moment de commutation d'état d'un état dans lequel un courant est alimenté de la batterie (33) à la machine électrique rotative (35) selon la sortie de la partie de détection d'actionnement d'accélérateur (41) à un état dans lequel la haute valeur de courant et la faible valeur de courant sont répétées alternativement dans la machine électrique rotative (35) selon la sortie de la partie de détection d'entrée de commande de courant (42), coïncide avec une synchronisation lorsque la valeur de sortie de la partie de détection d'entrée de commande de courant (42) fluctue.

6. Appareil d'entraînement destiné à être utilisé dans un véhicule électrique (10) selon l'une quelconque des revendications 1 à 5, dans lequel
l'aimant permanent est un aimant en ferrite ou un aimant à liaison de néodyme.

7. Appareil d'entraînement destiné à être utilisé dans un véhicule électrique (10) selon l'une quelconque des revendications 1 à 6, dans lequel
la machine électrique rotative (35) est configurée pour transmettre de l'énergie directement à une roue (12) sans interposition d'un mécanisme de transmission d'énergie.

8. Appareil d'entraînement destiné à être utilisé dans un véhicule électrique (10) selon l'une quelconque des revendications 1 à 7, dans lequel
l'appareil d'entraînement comporte un mécanisme de transmission d'énergie pour transmettre à une roue (12) une force que le conducteur applique à l'élément d'entrée de commande de courant (17a),
lorsque, au moins à faible vitesse et haute charge, un courant est alimenté de la batterie (33) à la machine électrique rotative (35) selon la sortie de la partie de détection d'actionnement d'accélérateur (41) et qu'en même temps l'élément d'entrée de commande de courant (17a) est actionné par le conducteur de sorte qu'un courant soit alimenté vers la machine électrique rotative (35) selon la sortie de la partie de détection d'entrée de commande de courant (42), et qu'en même temps la force appliquée à l'élément d'entrée de commande de courant (17a) est transmise à la roue (12), le dispositif de commande (30) est configuré pour alimenter vers la machine électrique rotative (35) un courant présentant une valeur de courant plus haute qu'une valeur de courant qui a été alimenté vers la machine électrique rotative (35) selon la sortie de la partie de détection d'actionnement d'accélérateur (41) à un moment de commutation d'état d'un état dans lequel un courant est alimenté de la batterie (33) à la machine électrique rotative (35) selon la sortie de la partie de détection d'actionnement d'accélérateur (41) à un état dans lequel la haute valeur de courant et la faible valeur de courant sont répétées alternativement dans la machine électrique rotative (35) selon la sortie de la partie de détection d'entrée de commande de courant (42).

9. Appareil d'entraînement destiné à être utilisé dans un véhicule électrique (10) selon l'une quelconque des revendications 1 à 7, dans lequel
l'appareil d'entraînement comporte un mécanisme de transmission d'énergie pour transmettre à une roue (12) une force appliquée par le conducteur à l'élément d'entrée de commande de courant (17a),
lorsque, au moins à faible vitesse et haute charge, un courant est alimenté de la batterie (33) à la machine électrique rotative (35) selon la sortie de la partie de détection d'actionnement d'accélérateur (41) et qu'en même temps l'élément d'entrée de commande de courant (17a) est actionné par le conducteur de sorte qu'un courant soit alimenté vers la machine électrique rotative (35) selon la sortie de la partie de détection d'entrée de commande de courant (42), et qu'en même temps la force appliquée à l'élément d'entrée de commande de courant (17a) n'est pas transmise à la roue (12), le dispositif de commande (30) est configuré pour alimenter vers la machine électrique rotative (35) un courant présentant une valeur de courant plus haute qu'une valeur de courant qui a été alimenté vers la machine électrique rotative (35) selon la sortie de la partie de détection d'actionnement d'accélérateur (41) à un moment de commutation d'état d'un état dans lequel un courant est alimenté de la batterie (33) à la machine électrique rotative (35) selon la sortie de la partie de détection d'actionnement d'accélérateur (41) à un état dans lequel la haute valeur de courant et la faible valeur de courant sont répétées alternativement dans la machine électrique rotative (35) selon la sortie de la partie de détection d'entrée de commande de courant (42).

10. Véhicule électrique (10),
le véhicule électrique (10) comprenant:
un corps de véhicule (10a);
une roue (12) qui est montée de manière rotative sur la carrosserie de véhicule (10a); et
l'appareil d'entraînement destiné à être utilisé dans un véhicule électrique (10) selon l'une quelconque des revendications 1 à 9.
